(19) **Europäisches Patentamt / European Patent Office / Office européen des brevets**

(11) **EP 1 903 475 B1**

(12) **FASCICULE DE BREVET EUROPEEN**

(45) Date de publication et mention
de la délivrance du brevet:
**29.04.2015 Bulletin 2015/18**

(51) Int Cl.:
**G06K 9/00** (2006.01)

(21) Numéro de dépôt: **07017430.5**

(22) Date de dépôt: **06.09.2007**

(54) **Procédé et dispositif de sélection d'images dans une séquence d'images d'iris reçue en flux continu**

Verfahren und Vorrichtung zur Auswahl von Bildern aus einer Sequenz von Bildern einer Iris, die kontinuierlich empfangen werden

Method and device for selecting images in a sequence of iris images received as a continuous stream

(84) Etats contractants désignés:
**DE FR GB IT**

(30) Priorité: **21.09.2006 FR 0608284**

(43) Date de publication de la demande:
**26.03.2008 Bulletin 2008/13**

(73) Titulaires:
- **STMICROELECTRONICS SA**
  **92120 Montrouge (FR)**
- **UNIVERSITE PAUL CEZANNE AIX-MARSEILLE III**
  **13628 Aix en Provence Cedex 1 (FR)**

(72) Inventeurs:
- **Martin, Lionel**
  **13790 Peynier (FR)**
- **Ketchantang, William**
  **67000 Stradbourg (FR)**
- **Derrode, Stéphane**
  **13013 Marseille (FR)**

(74) Mandataire: **Marchand, André et al**
**OMNIPAT**
**24 Place des Martyrs de la Résistance**
**13100 Aix-en-Provence (FR)**

(56) Documents cités:
**WO-A-00/39760      US-A1- 2004 101 170**
**US-A1- 2006 029 262**

- **ZHUOSHI WEI ET AL: "Robust and Fast Assessment of Iris Image Quality" ADVANCES IN BIOMETRICS, ICB 2006, vol. 3832, 5 janvier 2006 (2006-01-05), - 7 janvier 2006 (2006-01-07) pages 464-471, XP019026915 HONG KONG, CHINA & MA L ET AL: "PERSONAL IDENTIFICATION BASED ON IRIS TEXTURE ANALYSIS" IEEE TRANSACTIONS ON PATTERN ANALYSIS AND MACHINE INTELLIGENCE, IEEE SERVICE CENTER, LOS ALAMITOS, CA, US, vol. 25, no. 12, décembre 2003 (2003-12), pages 1519-1533, XP001186939 ISSN: 0162-8828**
- **KEE, G. AND BYUN, Y. AND LEE, K. AND LEE, Y: "Improved Techniques for an Iris Recognition System with High Performance" LECTURE NOTES ARTIFICIAL INTELLIGENCE, SPRINGER, vol. 2256, 2001, pages 177-181, XP002430882**
- **N.D. KALKA: "Image Quality Assessment for Iris Biometric" 2005, MASTER THESIS, WEST VIRGINIA UNIVERSITY , MORGANTOWN , XP002430885 * le document en entier ***
- **KETCHANTANG W ET AL: "Video Pupil Tracking for Iris Based Identification" LECTURE NOTES IN COMPUTER SCIENCE, vol. 3708, 2005, pages 1-8, XP019019653**
- **YI CHEN ET AL: "Localized Iris Image Quality Using 2-D Wavelets" ADVANCES IN BIOMETRICS, ICB 2006, vol. 3832, 5 janvier 2006 (2006-01-05), - 7 janvier 2006 (2006-01-07) pages 373-381, XP019026902 HONG KONG, CHINA**

- PAN LILI ET AL: "The Algorithm of Iris Image Preprocessing" AUTOMATIC IDENTIFICATION ADVANCED TECHNOLOGIES, 2005. FOURTH IEEE WORKSHOP ON BUFFALO, NY, USA 17-18 OCT. 2005, PISCATAWAY, NJ, USA,IEEE, 17 octobre 2005 (2005-10-17), pages 134-138, XP010856510 ISBN: 0-7695-2475-3
- PRATT W K: "Digital Image Processing" 2001, JOHN WILEY & SONS , NEW YORK , US , XP002430886 ISBN: 0-471-37407-5 PAGES 34, 725

- William Ketchantang ET AL: "Nouveau descripteur local de qualité des images d'iris dans les séquences vidéos", GRETSI, 11 September 2007 (2007-09-11), pages 1-3, XP055107189,

**EP 1 903 475 B1**

**Description**

La présente invention concerne le domaine du traitement d'images numériques, et plus particulièrement, les traitements appliqués à des images numériques de l'oeil dans des applications d'identification ou d'authentification.

La reconnaissance d'iris constitue une technique d'identification biométrique éprouvée, pourvu que l'image sur laquelle sont appliqués les traitements d'analyse et d'identification soit une image exploitable. En particulier, la performance des algorithmes de reconnaissance dépend fortement de la netteté de l'image de l'iris à identifier. Or, dans la plupart des applications, et notamment dans les applications dites "embarquées" (par exemple, pour du contrôle d'accès à un téléphone ou ordinateur portable, pour une clé électronique, etc.), la caméra (capteur numérique et lentille) utilisée ne dispose pas de dispositif d'autofocus ou de mise au point automatique, ajustant la focale (réelle ou simulée) en fonction de la distance.

De plus, pour obtenir une résolution suffisante de l'iris, les images sont prises à une distance relativement faible, généralement de l'ordre de 10 à 30 cm. Il en résulte une faible profondeur de champ (plage de distance entre la caméra et l'oeil, dans laquelle l'image est nette). Cette faible profondeur de champ ajoutée au fait que l'oeil est sphérique peut engendrer des différences de netteté entre des zones d'une même image de l'oeil. L'utilisateur doit être très coopératif en se plaçant dans une zone de netteté relativement réduite. En pratique, l'utilisateur bouge pour se placer à une distance de netteté.

Un traitement préalable à la reconnaissance d'iris proprement dite est donc souvent mis en oeuvre pour sélectionner une image suffisamment nette. Ce traitement préalable consiste à sélectionner parmi un certain nombre d'images, une ou plusieurs images nettes qui sont soumises à un algorithme de reconnaissance d'iris.

La présente invention concerne plus particulièrement le traitement de sélection appliqué à des images d'un même oeil pour sélectionner des images suffisamment nettes à envoyer au dispositif de reconnaissance.

Certains dispositifs de sélection de l'art antérieur enregistrent une séquence d'images, puis calculent un indice de netteté à l'aide d'un opérateur de netteté, et finalement sélectionnent les images présentant les meilleurs indices de netteté. Parmi les opérateurs de netteté les plus couramment utilisés, on peut citer Tenegrad, SML (Sum Modified Laplacian), SMD (Sum Modulus Difference), et FSWM (Frequency Selective Weighted median Filter). FSWM s'avère le plus insensible au bruit et le plus performant notamment en termes de ressources de calcul nécessaires.

Ce mode de sélection présente l'avantage d'être rapide, et de ne pas augmenter le coût du système. Cependant, l'acquisition d'une image d'iris exploitable est difficile à obtenir en pratique, car l'utilisateur n'est pas très coopératif. La distance de netteté (environ 25 cm) n'est pas toujours respectée. Très souvent, l'utilisateur bouge afin de se placer à la bonne distance de netteté, et parfois il ferme promptement les paupières. Les images fournies par la caméra sont souvent de mauvaise qualité (images défocalisées, images floues dues à des mouvements trop rapides de l'oeil, à la qualité du système optique, présence de cils devant l'iris, présence de taches blanches dans la pupille dues aux réflexions d'une source lumineuse, etc.). Les images les plus nettes sélectionnées par le dispositif de sélection sont donc souvent de qualité insuffisante pour localiser précisément l'iris dans l'image ou pour reconnaître celui-ci.

Le document US 2004/101170 décrit un procédé pour sélectionner des images d'oeil, comprenant une première sélection effectuée par la comparaison avec un seuil d'un indice de netteté basé sur un cumul de gradients dans une direction des intensités des pixels de l'image, puis une seconde sélection parmi les images issues de la première sélection, consistant à effectuer une nouvelle comparaison avec un seuil d'un indice de netteté calculé par un cumul de gradients de la luminance des pixels dans une fenêtre centrée sur la pupille.

D'autres procédés de reconnaissance d'iris sont décrits dans les documents WO 00/39760, US 2006/029262, "Robust and Fast Assessment of Iris Image Quality", Zhuoshi Wei et al., ADVANCES IN BIOMETRICS, ICB 2006, vol. 3832, 5 janvier 2006, p. 464-471, et "Video Pupil Tracking for Iris Based Identification", Ketchantang W. et al., Lecture Notes in Computer Science, vol. 3708, 2005, p. 1-8.

La présente invention vise à améliorer les procédés de sélection existants, notamment en réduisant le taux d'images non exploitables qui sont fournies au traitement d'analyse et d'identification.

L'invention vise également à proposer un procédé de sélection qui soit compatible avec les systèmes embarqués, notamment en terme de ressources de calcul utilisées.

Ces objectifs sont atteints par la prévision d'un procédé de sélection d'une image d'oeil dans une séquence d'images, mis en oeuvre dans un dispositif électronique, le procédé comprenant des étapes consistant à : présélectionner des images par une analyse simplifiée de netteté et/ou de contraste d'images de la séquence d'images, et sélectionner une image présélectionnée par une analyse fine de la netteté des images présélectionnées.

Selon un mode de réalisation, le procédé comprend pour chaque image présélectionnée des étapes de localisation de l'image de la pupille de l'oeil, la sélection d'une image présélectionnée comprenant des étapes de : détermination d'un profil d'intensité de pixels situés sur un anneau d'iris sensiblement circulaire, et centré sensiblement sur le centre de l'image de la pupille, le profil d'intensité étant établi en fonction d'un angle déterminant la position de chaque pixel sur l'anneau, mesure de la netteté de la texture de l'iris de l'oeil dans l'image, à partir d'une énergie de composantes moyennes fréquences extraites du profil d'intensité, calcul d'un indice de qualité pour chaque image fonction d'une

3

mesure de la densité des pixels noirs de l'image de la pupille, de la mesure de la netteté de la texture de l'image de l'iris, et d'une mesure de la vitesse de déplacement de la pupille dans l'image par rapport à une image précédente, et comparaison de l'indice de qualité de l'image à un seuil de qualité, les images sélectionnées ayant un indice de qualité supérieur au seuil de qualité.

L'invention concerne également un procédé de sélection d'une image d'oeil dans un ensemble d'images, mis en oeuvre dans un dispositif électronique, le procédé comprenant des étapes consistant à : présélectionner des images par une analyse simplifiée de netteté et/ou de contraste d'images de l'ensemble d'images, et sélectionner une image présélectionnée par une analyse fine de la netteté des images présélectionnées. Selon l'invention, l'ensemble d'images est une séquence d'images reçue en flux continu, la présélection d'images comprenant des étapes consistant à : localiser un motif dans chaque image de la séquence, estimer une vitesse de déplacement du motif entre deux images successives de la séquence, et sélectionner les images pour lesquelles la vitesse estimée de déplacement du motif est inférieure à un seuil de vitesse, la sélection d'une image présélectionnée comprenant des étapes de : localisation de l'image de la pupille de l'oeil, détermination d'un profil d'intensité de pixels situés sur un anneau d'iris sensiblement circulaire, et centré sensiblement sur le centre de l'image de la pupille, le profil d'intensité étant établi en fonction d'un angle déterminant la position de chaque pixel sur l'anneau, mesure de la netteté de la texture de l'iris de l'oeil dans l'image, à partir d'une énergie de composantes moyennes fréquences extraites du profil d'intensité, calcul d'un indice de qualité pour chaque image fonction d'une mesure de la densité des pixels noirs de l'image de la pupille, et de la mesure de la netteté de la texture de l'image de l'iris, et comparaison de l'indice de qualité de l'image à un seuil de qualité, les images sélectionnées ayant un indice de qualité supérieur au seuil de qualité.

Selon un mode de réalisation de l'invention, la présélection d'images comprend des étapes consistant à : calculer un contraste de chaque image de la séquence d'images, comparer le contraste obtenu à un seuil de contraste, et rejeter l'image si le contraste obtenu est inférieur au seuil de contraste.

Selon un mode de réalisation de l'invention, le contraste CS est calculé à l'aide de la formule suivante :

$$CS = \frac{\mathrm{Im\,ax} - \mathrm{Im\,in}}{\mathrm{Im\,ax} + \mathrm{Im\,in}}$$

dans laquelle :

$$\mathrm{Im\,ax} = \max_{i=1}^{N} G_t^i(x, y)$$

$$\mathrm{Im\,in} = \min_{i=1}^{N} G_t^i(x, y)$$

$G_t^i(x, y)$ représente le niveau de gris ou la luminance du pixel de coordonnées x et y dans une région de l'image t.

Selon un mode de réalisation de l'invention, la séquence d'images est reçue en flux continu, la présélection d'images comprenant des étapes consistant à : localiser un motif dans chaque image de la séquence, estimer une vitesse de déplacement du motif entre deux images successives de la séquence, et sélectionner les images pour lesquelles la vitesse estimée de déplacement du motif est inférieure à un seuil de vitesse.

Selon un mode de réalisation de l'invention, la localisation du motif dans chaque image comprend des étapes consistant à : estimer la position du motif dans l'image en fonction de la position du motif dans une image précédente de la séquence, définir une zone de recherche du motif centrée sur la position estimée du motif dans l'image, et localiser le motif dans l'image en se limitant à la zone de recherche.

Selon un mode de réalisation de l'invention, l'estimation de la position du motif dans l'image est effectuée en mettant en oeuvre le modèle de Kalman standard.

Selon un mode de réalisation de l'invention, le motif est l'image de la pupille d'un oeil.

Selon un mode de réalisation de l'invention, la pupille est localisée dans la zone de recherche en recherchant des pixels ayant un niveau de gris ou une luminance inférieure à un seuil d'intensité, et en déterminant le centre et le rayon d'un cercle suivant approximativement le contour des pixels trouvés.

Selon un mode de réalisation de l'invention, la sélection des images comprend une étape de mesure de la densité des pixels noirs dans une fenêtre de localisation de la pupille.

Selon un mode de réalisation de l'invention, la mesure de la netteté de la texture de l'iris dans une image t est effectuée en calculant un indice de netteté I à l'aide de la formule suivante :

$$I(t) = \frac{EMF}{ET - E\max}$$

dans laquelle : EMF représente l'énergie des composantes de moyennes fréquences d'un profil d'intensité d'iris des pixels situés sur l'anneau et localisés sur l'anneau par un angle, ET est l'énergie totale du spectre de Fourier du profil d'intensité, et Emax est l'énergie maximale du spectre de Fourier du profil d'intensité.

Selon un mode de réalisation de l'invention, l'indice de qualité Q pour une image t est obtenu à l'aide de la formule suivante :

$$Q(t) = \alpha d(t) + (1 - \alpha)I(t) + \frac{1}{V(t) + \dfrac{1}{\varepsilon}}$$

dans laquelle : $\alpha$ et $\varepsilon$ sont des coefficients déterminés expérimentalement, et égaux de préférence à 0,5 et 0,0001 respectivement, d est la densité des pixels noirs dans la fenêtre de localisation de la pupille dans l'image t, I est un indice de netteté de l'iris de l'image t, et V est la vitesse estimée de la pupille dans l'image t par rapport à l'image précédente.

Selon un mode de réalisation de l'invention, le seuil de qualité est ajusté par une machine d'apprentissage.

Selon un mode de réalisation de l'invention, le procédé comprend une étape préalable de sous-échantillonnage spatial des images de la séquence d'images.

Selon un mode de réalisation de l'invention, le procédé comprend des étapes de mémorisation d'un nombre prédéfini d'images sélectionnées, et de sélection parmi les images mémorisées d'un nombre prédéfini d'images ayant une netteté et/ou un contraste le plus élevé.

L'invention concerne également un dispositif de sélection d'une image d'oeil dans une séquence d'images en fonction de critères de netteté et de contraste, comprenant : un module de présélection d'images configuré pour présélectionner des images par une analyse simplifiée de netteté et/ou de contraste d'images de la séquence d'images, et un module de sélection d'image configuré pour sélectionner une image présélectionnée par une analyse fine de la netteté des images présélectionnées. Selon un mode de réalisation de l'invention, le dispositif comprend un module configuré pour localiser l'image de la pupille de l'oeil dans les images présélectionnées, le module de sélection d'image étant configuré pour déterminer dans chaque image présélectionnée un profil d'intensité de pixels situés sur un anneau d'iris sensiblement circulaire, centré sensiblement sur le centre de l'image de la pupille et ayant une largeur d'au moins un pixel, la position de chaque pixel sur l'anneau étant déterminée par un angle, le profil d'intensité étant établi en fonction d'un angle déterminant la position de chaque pixel sur l'anneau, et mesurer la netteté de la texture de l'iris de l'oeil à partir d'une énergie de composantes moyennes fréquences du profil d'intensité, calculer un indice de qualité pour chaque image fonction d'une mesure de la densité des pixels noirs de l'image de la pupille, de la mesure de la netteté de la texture de l'image de l'iris, et d'une mesure de la vitesse de déplacement de la pupille dans l'image par rapport à une image précédente, et comparer l'indice de qualité de l'image à un seuil de qualité, les images sélectionnées ayant un indice de qualité supérieur au seuil de qualité.

L'invention concerne également un dispositif de sélection d'une image d'oeil dans un ensemble d'images en fonction de critères de netteté et de contraste, comprenant : un module de présélection d'images configuré pour présélectionner des images par une analyse simplifiée de netteté et/ou de contraste d' images de l'ensemble d'images, et un module de sélection d'image configuré pour sélectionner une image présélectionnée, par une analyse fine de la netteté des images présélectionnées. Selon l'invention, l'ensemble d'images est une séquence d'images reçue en flux continu, le module de présélection d'images étant configuré pour : localiser un motif dans chaque image de la séquence, estimer une vitesse de déplacement du motif entre deux images successives de la séquence, et sélectionner les images pour lesquelles la vitesse estimée de déplacement du motif est inférieure à un seuil de vitesse, et en ce que le dispositif de sélection d'image comprend un module configuré pour localiser l'image de la pupille de l'oeil dans les images présélectionnées, le module de sélection d'image étant configuré pour : déterminer dans chaque image présélectionnée un profil d'intensité de pixels situés sur un anneau d'iris sensiblement circulaire et centré sensiblement sur le centre de l'image de la pupille, la position de chaque pixel sur l'anneau étant déterminée par un angle, le profil d'intensité étant établi en fonction d'un angle déterminant la position de chaque pixel sur l'anneau, et mesurer la netteté de la texture de l'iris de l'oeil à partir d'une énergie de composantes moyennes fréquences du profil d'intensité, calculer un indice de qualité pour chaque image fonction d'une mesure de la densité des pixels noirs de l'image de la pupille, de la mesure de la netteté de la texture de l'image de l'iris, et comparer l'indice de qualité de l'image à un seuil de qualité, les images sélectionnées ayant un indice de qualité supérieur au seuil de qualité.

Selon un mode de réalisation de l'invention, le module de présélection est configuré pour : calculer un contraste de chaque image de la séquence d'images, comparer le contraste obtenu à un seuil de contraste, et rejeter l'image si le contraste obtenu est inférieur au seuil de contraste.

Selon un mode de réalisation de l'invention, la séquence d'images est reçue en flux continu, le module de présélection étant configuré pour : localiser un motif dans chaque image de la séquence, estimer une vitesse de déplacement du motif entre deux images successives de la séquence, et sélectionner des images pour lesquelles la vitesse estimée de déplacement du motif est inférieure à un seuil de vitesse.

Selon un mode de réalisation de l'invention, le module de présélection est configuré pour : estimer la position du motif dans l'image en fonction de la position du motif dans une image précédente de la séquence, définir une zone de recherche du motif centrée sur la position estimée du motif dans l'image, et localiser le motif dans l'image en se limitant à la zone de recherche.

Selon un mode de réalisation de l'invention, le module de présélection est configuré pour estimer la position du motif dans l'image en mettant en oeuvre le modèle de Kalman standard.

Selon un mode de réalisation de l'invention, le motif est l'image de la pupille d'un oeil.

Selon un mode de réalisation de l'invention, le module de présélection est configuré pour localiser la pupille dans la zone de recherche en recherchant des pixels ayant un niveau de gris ou une luminance inférieure à un seuil d'intensité, et en déterminant le centre et le rayon d'un cercle suivant approximativement le contour des pixels trouvés.

Selon un mode de réalisation de l'invention, le module de sélection est configuré pour calculer un indice de netteté I(t) à l'aide de la formule suivante :

$$I(t) = \frac{EMF}{ET - E\max}$$

dans laquelle :

EMF représente l'énergie des composantes de moyennes fréquences d'un profil d'intensité d'iris des pixels situés sur l'anneau et localisés sur l'anneau par un angle,
ET est l'énergie totale du spectre de Fourier du profil d'intensité, et
Emax est l'énergie maximale du spectre de Fourier du profil d'intensité.

Selon un mode de réalisation de l'invention, le seuil de qualité est ajusté par une machine d'apprentissage.

Selon un mode de réalisation de l'invention, le dispositif comprend un module de sous-échantillonnage qui sous-échantillonne les images de la séquence d'images et qui envoie des images sous-échantillonnées au module de présélection.

Selon un mode de réalisation de l'invention, le dispositif comprend une zone mémoire pour mémoriser un nombre prédéfini d'images sélectionnées par le module de sélection fine et un module de sélection pour sélectionner parmi les images mémorisées un nombre prédéfini d'images ayant une netteté et/ou un contraste les plus élevés.

La présente demande couvre également un procédé et un dispositif de sélection d'images d'iris sur la base de deux paramètres, à savoir la netteté de la texture de l'iris et la densité de pixels noirs dans la pupille.

Plus précisément, le procédé de sélection d'images d'iris selon l'invention comprend pour chaque image d'iris des étapes de :

- détermination d'une zone de localisation de la pupille dans l'image,
- mesure de la densité des pixels noirs dans la zone de localisation de la pupille,
- mesure de la netteté de la texture de l'iris dans l'image,
- calcul d'un indice de qualité de l'image fonction de la mesure de la densité des pixels noirs de la pupille, et de la mesure de la netteté de la texture de l'iris, et
- sélection de l'image si l'indice de qualité de l'image est supérieur à un seuil de qualité.

Selon un mode de réalisation de l'invention, la pupille est localisée dans une zone de recherche en recherchant des pixels ayant un niveau de gris ou une luminance inférieure à un seuil d'intensité, et en déterminant le centre et le rayon d'un cercle suivant approximativement le contour des pixels trouvés.

Selon un mode de réalisation de l'invention, la mesure de la netteté de la texture de l'iris est appliquée aux pixels de l'iris situés sur un anneau sensiblement circulaire centré sensiblement sur le centre de la pupille et ayant au moins un pixel de large.

Selon un mode de réalisation de l'invention, la mesure de la netteté de la texture de l'iris est effectuée à partir de l'énergie des composantes moyennes fréquences des pixels situés sur l'anneau.

Selon un mode de réalisation de l'invention, la mesure de la netteté de la texture de l'iris dans l'image t est effectuée en calculant un indice de netteté I(t) à l'aide de la formule suivante:

EP 1 903 475 B1

$$I(t) = \frac{EMF}{ET - E\max}$$

dans laquelle :

EMF représente l'énergie des composantes de moyennes fréquences d'un profil d'intensité d'iris des pixels situés sur l'anneau et localisés sur l'anneau par un angle,
ET est l'énergie totale du spectre de Fourier du profil d'intensité, et
Emax est l'énergie maximale du spectre de Fourier du profil d'intensité.

Selon un mode de réalisation de l'invention, le procédé comprend une étape de mesure de la vitesse de déplacement de la pupille par rapport à une image précédente dans une séquence d'image, l'indice de qualité étant fonction de la vitesse mesurée de la pupille.

Selon un mode de réalisation de l'invention, l'indice de qualité Q(t) pour une image t est obtenu à l'aide de la formule suivante :

$$Q(t) = \alpha d(t) + (1 - \alpha)I(t) + \frac{1}{V(t) + \frac{1}{\varepsilon}}$$

dans laquelle :

$\alpha$, et $\varepsilon$ sont des coefficients déterminés expérimentalement, et égaux de préférence à 0,5 et 0,0001 respectivement,
d(t) est la densité des pixels noirs dans la fenêtre de localisation de la pupille dans l'image t,
I(t) est un indice de netteté de l'iris de l'image t, et
V(t) est la vitesse estimée de la pupille dans l'image t par rapport à l'image précédente.

Selon un mode de réalisation de l'invention, le seuil de qualité est ajusté par une machine d'apprentissage.
Le dispositif de sélection d'image selon l'invention met en oeuvre le procédé de sélection d'image tel que défini ci-avant.
La présente demande couvre également un procédé et un dispositif d'estimation de la netteté de l'iris dans des images d'iris, sur la base d'une analyse spectrale de pixels de l'iris situés sur un anneau centré sur la pupille.
Plus précisément, le procédé selon l'invention d'estimation de la netteté de l'iris dans des images d'iris comprend pour chaque image des étapes de :

- détermination du centre et du rayon de la pupille dans l'image,
- détermination d'un anneau d'au moins un pixel de large situé sur l'iris et centré sur le centre de la pupille, et
- mesure de la netteté de la texture de l'iris à partir de l'analyse spectrale des pixels de l'image situés sur l'anneau.

Selon un mode de réalisation de l'invention, la pupille est localisée dans une zone de recherche en recherchant des pixels ayant un niveau de gris ou une luminance inférieure à un seuil d'intensité, et en déterminant le centre et le rayon d'un cercle suivant approximativement le contour des pixels trouvés.
Selon un mode de réalisation de l'invention, la mesure de la netteté de la texture de l'iris est effectuée à partir de l'énergie des composantes moyennes fréquences des pixels situés sur l'anneau.
Selon un mode de réalisation de l'invention, la mesure de la netteté de la texture de l'iris dans l'image t est effectuée en calculant un indice de netteté I(t) à l'aide de la formule suivante :

$$I(t) = \frac{EMF}{ET - E\max}$$

dans laquelle:

EMF représente l'énergie des composantes de moyennes fréquences d'un profil d'intensité d'iris des pixels situés sur l'anneau et localisés sur l'anneau par un angle,
ET est l'énergie totale du spectre de Fourier du profil d'intensité, et

7

Emax est l'énergie maximale du spectre de Fourier du profil d'intensité.

Le dispositif d'estimation de la netteté de l'iris selon l'invention met en oeuvre le procédé de sélection d'image tel que défini ci-avant.

Ces objets, caractéristiques et avantages ainsi que d'autres de la présente invention seront exposés plus en détail dans la description suivante d'un mode de réalisation de l'invention, faite à titre non limitatif en relation avec les figures jointes parmi lesquelles :

- la figure 1 représente sous forme de blocs un système de reconnaissance d'iris,
- la figure 2 représente sous forme de blocs un dispositif de sélection selon un mode de réalisation de l'invention,
- les figures 3A, 3B et 3C sont des images d'oeil illustrant un procédé de sélection d'images d'iris selon un mode de réalisation de l'invention,
- les figures 4 et 5 sont des courbes illustrant le procédé de sélection d'images d'iris selon un mode de réalisation de l'invention,
- la figure 6 est un exemple d'image d'iris défocalisée susceptible d'être traitée par le procédé de sélection selon un mode de réalisation de l'invention,
- la figure 7 est un organigramme illustrant différentes étapes du procédé de sélection selon un mode de réalisation de l'invention,
- les figures 8 à 11 sont des courbes illustrant les performances du procédé de sélection d'images d'iris.
- la figure 12 représente sous forme de blocs un dispositif de sélection selon un autre mode de réalisation de l'invention.

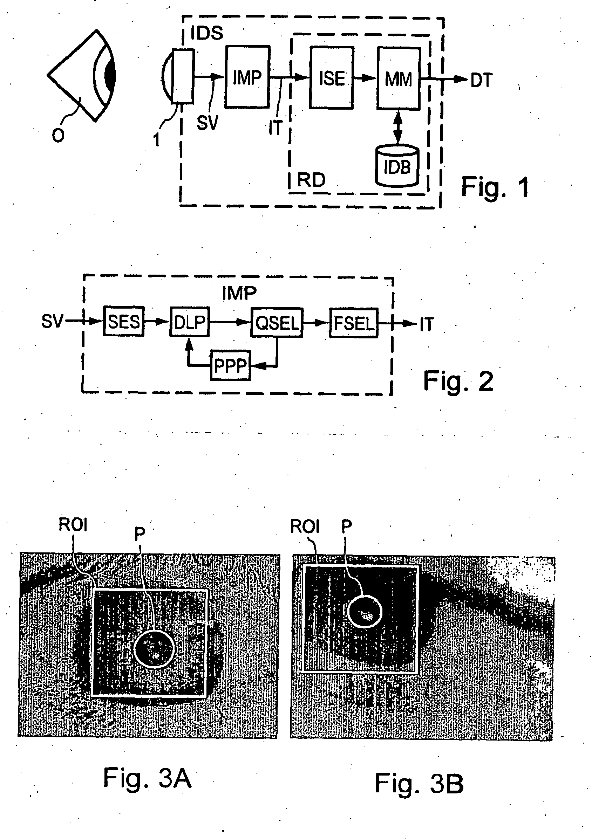

La figure 1 représente un système de reconnaissance d'iris IDS. Le système IDS est destiné à exploiter des images d'oeil pour effectuer une identification ou authentification par reconnaissance iridienne. A cet effet, le système IDS comprend un capteur d'image numérique 1 qui acquiert une séquence de trames vidéo ou d'images numériques SV d'un oeil O d'un utilisateur, un dispositif de sélection d'image IMP qui reçoit la séquence d'images SV, et un dispositif de reconnaissance d'iris ID utilisant les images sélectionnées IT par le dispositif IMP pour reconnaître les images d'iris. Le dispositif ID comprend classiquement un module d'extraction de signature d'iris ISE qui extrait une signature d'iris des images sélectionnées par le module IMP, et un module de comparaison MM connecté à une base de données de signatures d'iris IDB, qui recherche si la signature d'iris fournie par le module ISE se trouve dans la base donnée IDB. Le module MM fournit un signal de détection DT indiquant si oui ou non l'iris du sujet a été reconnu.

Par souci de clarté, seules les modules ou étapes qui sont utiles à la compréhension de l'invention ont été représentés dans les figures et seront décrits par la suite. En particulier, les modules d'extraction de signature d'iris ISE et de reconnaissance d'iris MM exploitant le procédé de sélection de l'invention n'ont pas été détaillées, l'invention étant compatible avec toute exploitation aval des images sélectionnées. De même, le mode d'obtention des images à traiter par l'invention n'a pas été détaillé, l'invention étant là encore compatible avec n'importe quelle image numérique d'oeil, en niveau de gris ou en couleur.

La figure 2 représente un mode de réalisation selon l'invention d'un dispositif de sélection IMP. Le dispositif IMP analyse en temps réel chaque trame ou image d'une séquence d'images SV, et sélectionne les images IT ayant une qualité suffisante pour permettre une localisation de l'iris et une identification de l'utilisateur. Le dispositif IMP comprend un module de détection et de localisation de la pupille DLP, un module de présélection ou de sélection rapide d'images QSEL, un module de sélection ou de sélection fine d'images FSEL, et un module de suivi de la pupille PPP.

Le module DLP recherche la pupille (région noire) dans chaque image de la séquence dans une zone de recherche dite "région d'intérêt" ROI où la pupille est supposée se trouver. La détection de la pupille dans une image est effectuée en mesurant le contraste dans la zone de recherche. La région ROI est avantageusement estimée en fonction d'une ou plusieurs images précédentes par le module PPP.

Les figures 3A et 3B sont des images d'oeil sur lesquelles la région d'intérêt ROI a été représentée. Dans l'exemple des figures 3A et 3B, la région ROI présente une forme carrée couvrant sensiblement l'ensemble de l'iris.

Si le rapport signal sur bruit de l'image est suffisant, l'algorithme suivant peut être utilisé pour détecter la pupille.

Tout d'abord, une valeur de contraste CS est calculée à l'aide de la formule suivante :

$$CS = \frac{I\max - I\min}{I\max + I\min} \qquad\qquad (1)$$

dans laquelle :

$$\mathrm{Imax} = \max_{i=1}^{N} G_t^i(x,y) \qquad (2)$$

$$\mathrm{Imin} = \min_{i=1}^{N} G_t^i(x,y) \qquad (3)$$

$G_t^i(x,y)$ représente le niveau de gris ou la luminance du pixel i de la région ROI de l'image t ayant les coordonnées (x, y) dans l'image.

La mesure de Imax est obtenue à partir des niveaux de gris ayant un niveau de gris inférieur à un seuil TH, afin de ne pas prendre en compte les pixels saturés issus de la réflexion spéculaire d'une source lumineuse émettant dans le proche infrarouge. La valeur de contraste CS obtenue est ensuite comparée à un seuil de contraste CT. On considère en effet que la pupille peut être détectée lorsque le contraste dans la région ROI est suffisamment élevé, par exemple de l'ordre de 0,6. Si le contraste de l'image est inférieur au seuil CT, l'image est rejetée.

Ensuite, si le contraste CS est supérieur au seuil de contraste CT, la pupille est localisée dans l'image t par le module DLP en positionnant dans l'image un cercle P (représenté en trait blanc dans les figures 3A, 3B) de centre C(t) et de rayon R(t) suivant approximativement le contour de la pupille. La position du centre C(t) est déterminé en recherchant les pixels ayant un niveau de gris inférieur à un seuil d'intensité IT.

Le seuil d'intensité IT est déterminé en fonction de la répartition des niveaux de gris $G_t^i(x,y)$ des pixels dans la région ROI par l'équation suivante:

$$\mathrm{IT} = \mu - \sigma \qquad (4)$$

dans laquelle $\mu$ représente la moyenne et $\sigma$ l'écart type de l'histogramme des niveaux de gris ou de la luminance $G_t^i(x,y)$ des pixels dans la région ROI. L'usage d'un tel seuil adaptatif rend la détection de la pupille insensible aux changements de luminosité des images.

Le centre C(t) et le rayon R(t) de la pupille sont ensuite déterminés. A cet effet, chaque point de la région d'intérêt ROI est considéré comme le centre potentiel C(t) et les gradients des points situés sur des arcs de cercle centrés sur le centre potentiel considéré sont mesurés. Les rayons de ces arcs de cercle varient dans une plage de rayons possibles d'une pupille, et le centre de la pupille correspond au point pour lequel la variation du gradient est la plus importante. Les variations du gradient sont déterminés à l'aide d'opérateurs intégro-différentiels.

Ainsi, le rayon R(t) de la pupille est déterminé à l'aide d'opérateurs intégro-différentiels par l'équation suivante :

$$R(t) = \mathrm{Arg\,max}_r \left| \frac{\partial}{\partial c} \left\{ \sum_{i \in C} G_t^i \{ x_i(r,\theta), y_i(r,\theta) \} \right\} \right| \qquad (5)$$

dans laquelle:

C représente le cercle de rayon R, R variant entre des valeurs minimum Rmin et maximum Rmax estimées du rayon de la pupille,
Argmax représente une fonction fournissant le rayon R ayant un score maximum par rapport à une formule normée.

Autrement dit, le rayon R(t) est obtenu en prenant la valeur maximum de l'intégrale de la norme du gradient au rayon R-1 moins l'intégrale de la norme du gradient au rayon R.

Selon une autre méthode dite "par segmentation", le centre C(t) est déterminé en calculant le centre géométrique de la région pupille segmentée dans la région ROI. La segmentation de la pupille dans la région ROI est obtenue par seuillage adaptatif d'histogramme. Ainsi, tous les pixels qui auront un niveau de gris inférieur au seuil IT prendront la valeur 255 comme niveau de gris, et les autres prendront la valeur 0, d'où la segmentation de la pupille.

Un autre procédé de détermination du centre C(t) et du rayon R(t) de la pupille est exposé dans le document Tisse, et al. "Person identification technique using human iris recognition", Journal of System Research, vol.4, pp.67-75, 2003.

Le module PPP effectue une prédiction de la position P(t/t-1) du centre de la pupille dans l'image suivante t notamment à partir de la position du centre C(t-1) de la pupille dans l'image courante, et des précédentes mesures du centre de la pupille. A cet effet, il met en oeuvre le modèle de Kalman standard SKF tel que décrit notamment dans le document "Video Pupil Tracking for Iris based Identification", W. Ketchantang, S. Derrode, S. Bourennane, and L. Martin, ACIVS 2005, LNCS3708, pp 1-8, 2005.

Le modèle de Kalman Standard prédit l'état d'un système à partir des précédentes mesures effectuées sur ce dernier de telle sorte à minimiser la matrice de covariance de l'erreur de prédiction.

Une fois que la position prédite P(t/t-1) est déterminée, le module PPP positionne également la région d'intérêt ROI(t) dans l'image suivante t. La région ROI(t) est centrée sur la position prédite P(t/t-1) et présente des côtés de longueur choisie de l'ordre de quatre fois le rayon de la pupille R(t-1) dans l'image courante t-1 (en fonction de la dilatation de la pupille).

Le module de sélection rapide QSEL effectue une estimation de la vitesse V(t) de déplacement de la pupille entre l'image t et l'image précédente t-1. Si la vitesse ainsi déterminée est trop élevée (supérieure à un seuil de vitesse VT), on considère que l'image de l'iris dans l'image courante t est floue, et donc non exploitable pour effectuer une identification. Par conséquent, l'image t est rejetée.

La vitesse estimée de déplacement V(t) de la pupille est obtenue à partir de la position prédite P(t/t-1) du centre de la pupille dans l'image t et de la position mesurée C(t) du centre de la pupille dans l'image t :

$$V(t) = \frac{1}{\Delta T} \|P(t/t-1)C(t)\| \qquad (6)$$

dans laquelle $\Delta T$ est égal à l'intervalle de temps entre deux images consécutives de la séquence d'images SV (par exemple 1/25 s), et $\|P(t/t-1)C(t)\|$ représente la distance en nombre de pixels entre les points P(t/t-1) et C(t).

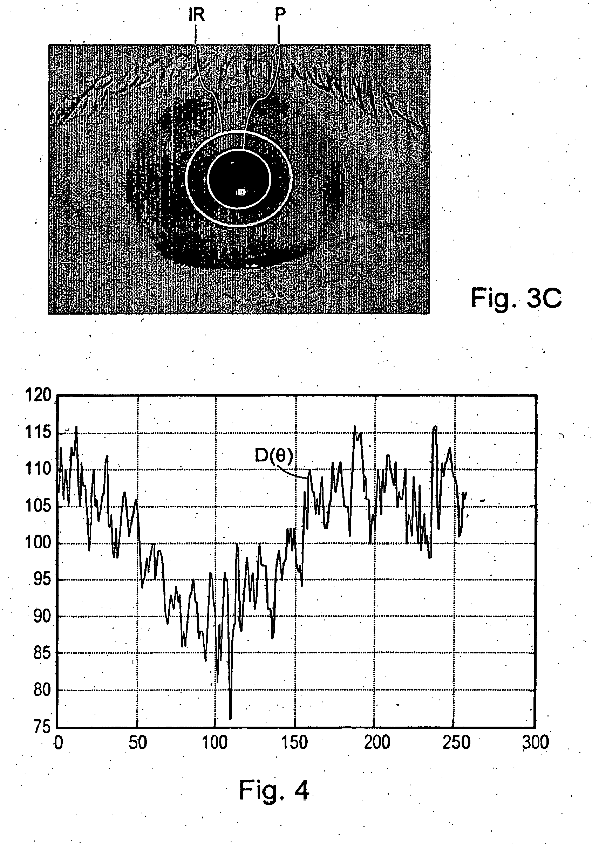

Tout d'abord, le module FSEL localise dans chaque image sélectionnée par le module QSEL un anneau sensiblement circulaire situé dans l'iris et centré sur le centre de la pupille, comme illustré sur la figure 3C. Sur la figure 3C, l'anneau IR présente un rayon interne égal à environ 1,5 fois le rayon R(t) de la pupille dans l'image t et une largeur d'au moins un pixel. Tous les pixels de l'iris situés sur l'anneau IR sont extraits pour former un profil d'intensité de l'iris. Le profil d'intensité donne l'intensité D(t,θ) (luminance ou niveau de gris) de chaque pixel extrait de l'image t en fonction d'un angle θ déterminant la position du pixel sur l'anneau IR. Le profil d'intensité de l'iris caractérise la qualité de la texture de l'iris.

La prise en compte uniquement des pixels situés sur un anneau permet dans certains cas de s'affranchir d'un masquage partiel de l'iris par les cils ou une paupière.

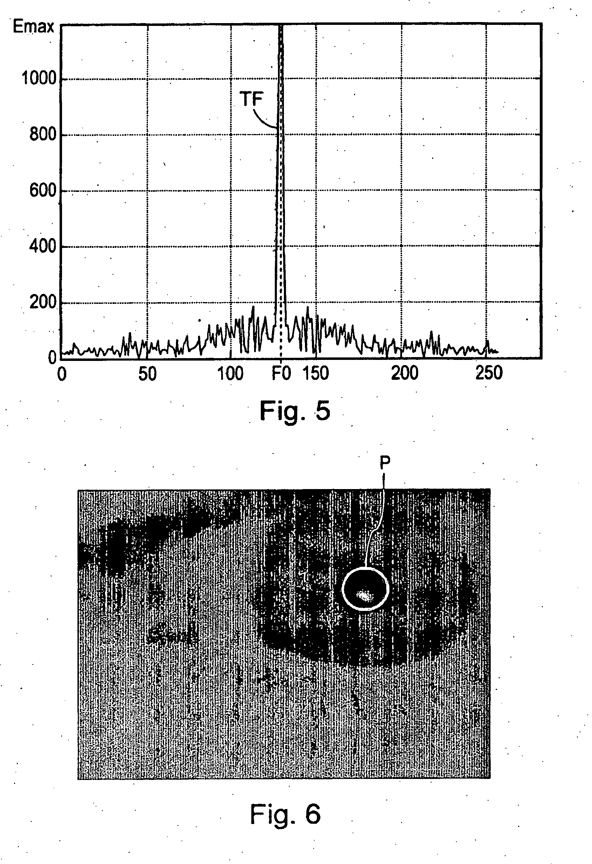

La figure 4 représente un exemple de profil d'intensité d'iris D(t,θ) en fonction de l'angle θ. Le module FSEL calcule ensuite la transformée de Fourier (Transformée de Fourier Rapide FFT) à chaque profil D(t,θ) d'image. Le profil utilisé pour le calcul de la transformée de Fourier est constitué d'un nombre de points en puissance de 2 pour accélérer le calcul, par exemple 256 points. Dans.l'exemple de la figure 4, ces 256 points représentent la totalité du cercle (256 points correspondent à 360°). La courbe de variation de l'amplitude de la transformée de Fourier TF du signal D(t,θ) est représentée sur la figure 5. La transformée de Fourier du signal D(t,θ) comprend un pic très marqué centré sur la fréquence centrale (F0/2 = 128). Compte tenu de la symétrie du spectre de Fourier, on travaille uniquement avec la moitié gauche du spectre.

Le module FSEL calcule ensuite un indice de netteté en utilisant avantageusement les énergies des composantes de moyennes fréquences du spectre du signal D(t,θ). Le domaine des moyennes fréquences est par exemple choisi égal à F0/2 +/- F0/4, F0 étant la fréquence centrale du spectre.

L'indice de netteté de l'iris est calculé à l'aide de la formule suivante :

$$I(t) = \frac{EMF}{ET - E\max} \qquad (7)$$

dans laquelle:

EMF est l'énergie des composantes de moyennes fréquences du signal D(t,θ),
ET est l'énergie totale du spectre de Fourier, et
Emax est l'énergie maximale du spectre de Fourier, qui correspond à l'énergie à la fréquence centrale F0 du spectre.

Dans le domaine des fréquences moyennes, il s'avère que l'indice de netteté obtenu est moins sensible au bruit et à la présence de cils devant l'iris.

Il est à noter que la mesure de netteté de l'image obtenue à l'aide de la formule précédente est indépendante du contraste. En effet, si l'image G' est moins contrastée que l'image G, D'= λ D avec 0 < λ < 1. Il en résulte les équations suivantes :

$$EMF(D') = \sum_{MF} \sum \|\lambda D(u)\|^2 = \lambda^2 \sum_{MF} \sum \|D(u)\|^2 \qquad (8)$$

$$ET(D') = \sum_{SF} \sum \|\lambda D(u)\|^2 = \lambda^2 \sum_{SF} \sum \|D(u)\|^2 \qquad (9)$$

$$E\max = \|\lambda D(0)\|^2 = \lambda^2 \|D(0)\|^2 \qquad (10)$$

dans lesquelles (0) est le centre du spectre de Fourier, MF est le domaine des fréquences moyennes dans l'espace de Fourier, SF est le spectre de Fourier. Par conséquent l'indice de netteté I(G') de l'image G' est égal à l'indice de netteté I(G) de l'image G.

Le module FSEL détermine ensuite un indice de qualité Q (t) de l'iris dans l'image t. L'indice de qualité Q(t) est par exemple calculé à l'aide de la formule suivante:

$$Q(t) = \alpha d(t) + (1-\alpha)I(t) + \cfrac{1}{V(t) + \cfrac{1}{\varepsilon}} \qquad (11)$$

dans laquelle :

α et ε sont des coefficients déterminés expérimentalement et égaux par exemple à 0,5 et 0,0001, et
d(t) est la densité des pixels noirs dans la fenêtre P de localisation de la pupille dans l'image t et est déterminé en divisant le nombre de pixels identifiés comme appartenant à la pupille par le nombre total de pixels de la région ROI.

L'indice de qualité Q(t) permet de détecter une image fortement défocalisée (spot blanc dans la pupille très étalé et donc d(t) faible), et/ou peu nette en raison d'une vitesse de déplacement de l'iris élevée (proche du seuil de vitesse VT), et/ou dans laquelle l'iris présente un indice de netteté faible.

Si l'indice de qualité Q(t) est inférieur à un seuil de qualité QT, le module FSEL rejette l'image t. Le seuil QT est choisi empiriquement de manière à obtenir un faible taux de fausses alarmes FAR (images de qualité insuffisante sélectionnées) et un faible taux de faux rejets FRR (images de qualité suffisante rejetées).

Bien entendu, l'indice de qualité peut ne pas prendre en compte la vitesse de déplacement de l'iris V(t), celle-ci étant déjà utilisée comme critère de sélection par le module de sélection rapide QSEL. Dans ce cas, le dernier terme de la somme donnant l'indice de qualité dans la formule (11) est supprimé.

La figure 6 représente une image rejetée par le module FSEL car défocalisée : la densité des pixels noirs de la pupille d(t) y est égale à 0,52.

Grâce à la combinaison du module de sélection rapide QSEL et du module de sélection fine FSEL, le module IMP est capable de traiter en temps réel une séquence d'images avec de faibles taux FAR et FRR, sans mettre en oeuvre des moyens de calcul très performants.

A titre d'exemple, une image de 640x480 pixels peut être traitée en 20 ms en moyenne à l'aide d'un ordinateur personnel équipé d'un microprocesseur de type Pentium 4 cadencé à 3 GHz et programmé en langage C++.

Toutefois, pour alléger les traitements d'image effectués par les modules DLP, QSEL et FSEL, le module de sélection IMP peut comprendre également un module de sous-échantillonnage SES qui applique un traitement de sous-échantillonnage spatial aux images de la séquence d'images. Le traitement de sous-échantillonnage consiste à réduire la résolution des images d'un facteur par exemple égal à 4, pour passer d'images de 640x480 pixels à des images 320x240 pixels. Ce traitement de sous-échantillonnage affecte peu les performances du traitement de sélection d'images selon l'invention.

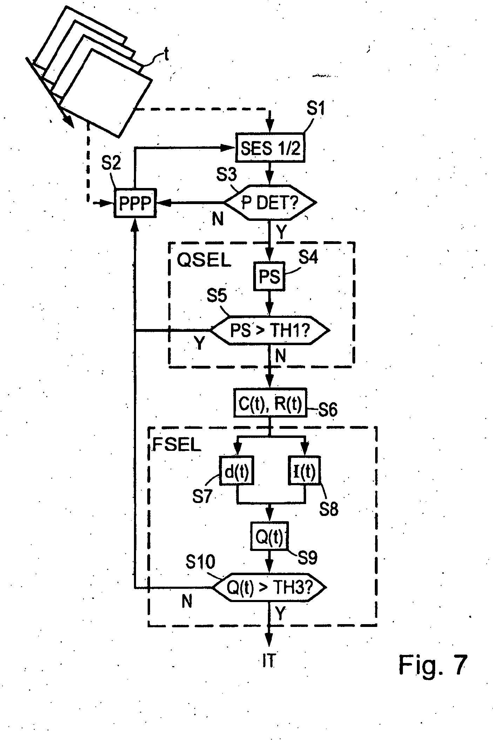

La figure 7 représente différentes étapes du procédé selon un mode de réalisation de l'invention. Le procédé comprend des étapes S1 à S10.

A l'étape S1, l'image est sous-échantillonnée par le module SES. A l'étape S2, la position de la pupille dans l'image suivante est évaluée par le module PPP. A l'étape S3, si la pupille n'est pas détectée dans l'image courante compte tenu de la position évaluée, l'image courante est rejetée et les modules SES et PPP traitent l'image suivante. Si la pupille est détectée, la vitesse de déplacement de la pupille entre l'image précédente et l'image courante est estimée à l'étape S4. Si à l'étape S5, la vitesse de déplacement de la pupille est supérieure au seuil de vitesse VT, l'image est rejetée et les modules SES et PPP traitent l'image suivante (étapes S1 et S2). Si la vitesse de déplacement de la pupille est inférieure au seuil VT, les paramètres de localisation de la pupille sont mis à jour à l'étape S6. Cette étape correspond à la détermination du centre C(t) et du rayon R(t) de la pupille. Aux étapes S7 et S8, le module FSEL évalue la densité des pixels noirs dans la pupille et détermine la netteté de l'iris. A l'étape S9, le module FSEL calcule l'indice de qualité Q(t) de l'image. A l'étape S10, le module FSEL compare l'indice de qualité Q(t) obtenu au seuil QT. Si l'indice de qualité est inférieur au seuil QT, l'image est rejetée et les modules SES et PPP traitent l'image suivante (étapes S1 et S2), sinon l'image est sélectionnée pour effectuer une identification et est donc envoyée au dispositif de reconnaissance d'iris RD.

Grâce au suivi rapide de la pupille au cours du temps effectué par les modules PPP et QSEL, la pupille est localisée précisément et rapidement sans moyens de calculs importants, la zone de recherche de la pupille étant limitée à la zone ROI. Le mouvement de la pupille entre deux images peut donc être évalué afin de déterminer si sa vitesse est trop élevée (flou important).

Le modèle de suivi mis en oeuvre par le module PPP perd la pupille ou la localise partiellement lorsque les paupières sont fermées, lorsque la profondeur de défocalisation est importante, lorsque la pupille n'apparaît pas dans l'image, lorsque le contraste dans la zone ROI est faible, ou lorsque la vitesse de la pupille entre deux images est trop élevée (image floue). Une défocalisation accentuée provoque un étalement de l'intensité des pixels de la pupille et donc diminue le contraste dans la région ROI. Le module de suivi PPP est capable de détecter et localiser la pupille même après avoir été perdue dans les images précédentes.

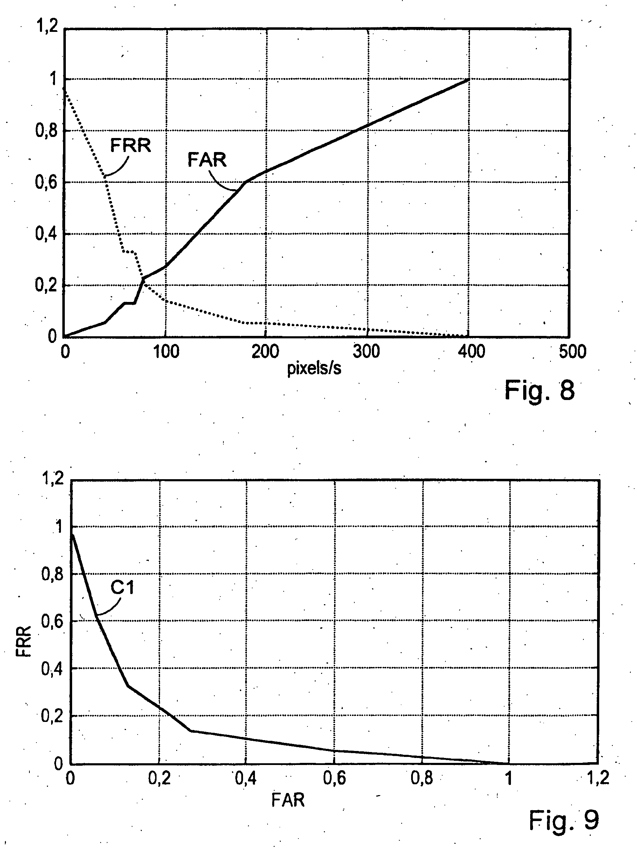

Les figures 8 à 11 représentent des courbes illustrant les performances du procédé selon l'invention. Ces courbes sont obtenues à partir d'une base d'apprentissage constituée de 177 images dont 50 images nettes, 100 images floues et défocalisées et 27 images diverses non exploitables.

La figure 8 illustre l'influence du seuil de vitesse VT sur le taux de fausses alarmes FAR et sur le taux de faux rejets FRR en sortie du module de sélection rapide QSEL. Si on augmente le seuil de vitesse, le taux de faux rejets diminue, mais le taux de fausses alarmes augmente. La figure 8 fait apparaître que le taux de faux rejets diminue plus rapidement que le taux de fausses alarmes augmente. Les courbes de variation des taux FAR et FRR se croisent à une valeur du seuil VT d'environ 90 pixels/s, lorsque les taux présentent une valeur d'environ 0,2.

La figure 9 représente une courbe d'évolution C1 du taux de faux rejets FRR en fonction du taux de fausses alarmes FAR en sortie du module QSEL.

Si l'on choisit un seuil VT égal à 70 pixels/s, on obtient pour le module FSEL un taux FAR égal à environ 13 % et un taux FRR égal à environ 35 %. En sortie du dispositif de reconnaissance RD, on obtient des taux de fausses alarmes et de faux rejets de respectivement 0,03 % et 8 % (ces taux sont obtenus à partir d'une base de 150 vidéos différentes provenant de 74 yeux différents, avec 223.000.000 comparaisons inter classe et 6.000.000 comparaisons intra classe. Le module FSEL permet de réduire les valeurs de ces taux.

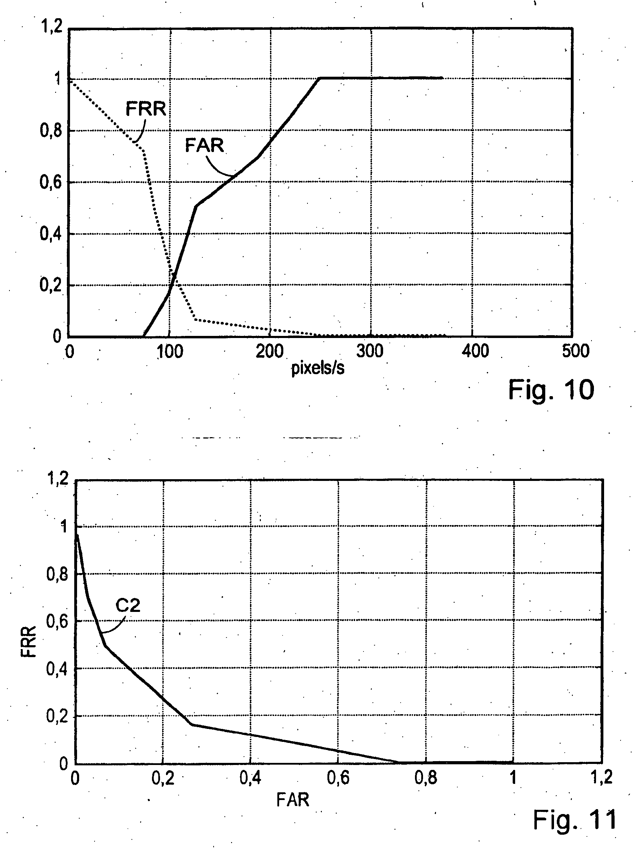

Les figures 10 et 11 illustrent l'influence du seuil de qualité QT sur le taux de fausses alarmes FAR et sur le taux de faux rejets FRR en sortie du module de sélection fine FSEL.

La figure 10 représente des courbes d'évolution du taux de fausses alarmes FAR et du taux de faux rejets FRR en sortie du module de sélection fine FSEL en fonction du seuil QT. La figure 11 représente une courbe d'évolution C2 du taux de faux rejets FRR en fonction du taux de fausses alarmes FAR en sortie du module FSEL.

Si l'on choisit un seuil QT égal à 1, les taux de fausses alarmes FAR et de faux rejets FRR à la sortie du module FSEL sont respectivement égaux à 7 % et 49 % (ces valeurs sont obtenues sur la même base d'apprentissage que la précédente). En sortie du dispositif de reconnaissance RD, ces taux diminuent pour atteindre des valeurs égales respectivement à 0,037 % et 2,9 %. Ces taux sont obtenus avec 25.000.000 comparaisons inter classe et 1.000.000 comparaisons intra classe.

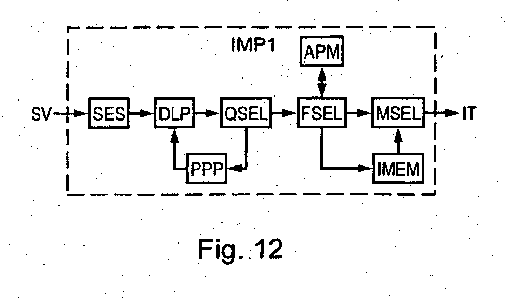

Le taux FAR peut être réduit en mémorisant un nombre prédéfini K d'images d'iris exploitables, puis en sélectionnant les M meilleures images parmi les K images mémorisées (M < K). Ainsi, la figure 12 représente un dispositif de sélection IMP1 selon un autre mode de réalisation de l'invention. Le dispositif IMP1 est identique au dispositif IMP représenté sur la figure 2, mis à part qu'il comprend en outre un mémoire image IMEM et un module de sélection d'images MSEL dans la mémoire IMEM. Le module FSEL mémorise dans la mémoire IMEM toutes les images ayant un indice de qualité supérieur au seuil QT en association avec leur indice de qualité. La mémoire IMEM mémorise les K dernières images sélectionnées par le module FSEL. A chaque fois qu'une nouvelle série de K images est insérée dans la mémoire IMEM par le module FSEL, le module MSEL sélectionne les M images ayant les indices de qualité Q(t) les plus élevés.

Cette solution requiert une place mémoire supplémentaire pour mémoriser K images.

Pour décider si une image d'iris est exploitable ou pas, le seuil de qualité QT peut être déterminé empiriquement sur la base d'expériences, ou à l'aide d'une machine d'apprentissage APM (approche SVM, Bayésienne, ...). Ces deux

**EP 1 903 475 B1**

solutions fournissent de bons résultats (faibles taux FAR et FRR) si les images utilisées lors de l'apprentissage sont représentatives des images réelles à traiter. L'utilisation d'une machine d'apprentissage requiert une place mémoire relativement importante pour sauvegarder les paramètres caractérisant les images exploitables et non exploitables pour la reconnaissance. L'utilisation d'une machine d'apprentissage du type bayésien permet d'obtenir des performances pratiquement identiques à celles de l'approche empirique. Toutefois, la machine d'apprentissage présente l'avantage de fournir des performances qui s'améliorent avec la quantité d'images analysées. Le taux de faux rejets FRR est relativement important, en raison notamment de l'opérateur de netteté employé qui présente une dispersion non nulle. Il en résulte que certains iris faiblement texturés vont être classés dans les images floues. Pour limiter cet inconvénient, le seuil QT peut être augmenté au détriment d'un taux de fausses alarmes FAR plus élevé.

Les cas d'erreur de sélection (fausses alarmes) apparaissent en général avec les images faiblement défocalisées. Pour corriger ces erreurs, le seuil QT peut être augmenté pour être plus strict dans la sélection des meilleures images, ce qui entraîne une augmentation du taux de faux rejets. En contrepartie, les images d'iris fournies au dispositif de reconnaissance d'iris RD sont de meilleure qualité (le système arrête les acquisitions après avoir sélectionné le nombre voulu d'images exploitables pour l'identification).

Il apparaîtra clairement à l'homme de l'art que la présente invention est susceptible de diverses variantes de réalisation et d'applications. En particulier, l'invention réside dans le principe de combiner un traitement de présélection rapide et grossier d'images, nécessitant de faibles moyens de calculs, suivi d'un traitement de sélection plus fine d'images, plus coûteux en termes de ressources de calcul. Ainsi, le nombre d'images devant être analysées par le traitement de sélection fine d'images est réduit par le traitement de présélection. Le procédé selon l'invention est ainsi adapté notamment à analyser un grand nombre d'images avec des moyens de calcul peu performants. Le procédé selon l'invention est donc applicable à des images qui ne sont pas nécessairement des images d'iris. Il n'est donc pas non plus indispensable que ces images soient corrélées dans le temps, cette contrainte n'étant nécessaire que si le traitement de présélection est basé sur une mesure de vitesse de mouvement d'un motif entre deux images.

Même si l'invention permet d'éviter la nécessité d'un dispositif d'autofocus ou de mise au point automatique, l'invention est applicable également aux images fournies par une caméra disposant d'un tel dispositif.

L'invention ne s'applique pas non plus nécessairement à des images en niveaux de gris. Elle est également applicable aux images en couleur.

**Revendications**

1.  Procédé de sélection d'une image d'oeil dans une séquence d'images, mis en oeuvre dans un dispositif électronique, le procédé comprenant des étapes consistant à :

présélectionner des images (t) par une analyse simplifiée de netteté et/ou de contraste d'images de la séquence d'images, et
sélectionner une image présélectionnée par une analyse fine de la netteté des images présélectionnées, **caractérisé en ce qu'**il comprend pour chaque image présélectionnée une étape de localisation de l'image de la pupille (P) de l'oeil, la sélection d'une image présélectionnée comprenant des étapes de :

détermination d'un profil d'intensité ($D(\theta)$) de pixels situés sur un anneau (IR) d'iris sensiblement circulaire, et centré sensiblement sur le centre de l'image de la pupille, le profil d'intensité étant établi en fonction d'un angle déterminant la position de chaque pixel sur l'anneau,
mesure de la netteté de la texture de l'iris de l'oeil dans l'image, à partir d'une énergie de composantes moyennes fréquences extraites du profil d'intensité,
calcul d'un indice de qualité ($Q(t)$) pour chaque image fonction d'une mesure de la densité des pixels noirs de l'image de la pupille, de la mesure de la netteté de la texture de l'image de l'iris, et d'une mesure de la vitesse de déplacement de la pupille dans l'image par rapport à une image précédente, et
comparaison de l'indice de qualité de l'image à un seuil de qualité (QT), les images sélectionnées ayant un indice de qualité supérieur au seuil de qualité.

2.  Procédé selon la revendication 1, dans lequel la séquence d'images (t) est reçue en flux continu, la présélection d'images comprenant des étapes consistant à :

localiser un motif (P) dans chaque image de la séquence,
estimer une vitesse de déplacement du motif entre deux images successives de la séquence, et
sélectionner les images pour lesquelles la vitesse estimée de déplacement du motif est inférieure à un seuil de vitesse (VT).

**13**

3. Procédé de sélection d'une image d'oeil dans un ensemble d'images, mis en oeuvre dans un dispositif électronique, le procédé comprenant des étapes consistant à :

présélectionner des images (t) par une analyse simplifiée de netteté et/ou de contraste d'images de l'ensemble d'images, et

sélectionner une image présélectionnée par une analyse fine de la netteté des images présélectionnées, **caractérisé en ce que** l'ensemble d'images est une séquence d'images (t) reçue en flux continu, la présélection d'images comprenant des étapes consistant à :

localiser un motif (P) dans chaque image de la séquence,
estimer une vitesse de déplacement du motif entre deux images successives de la séquence, et
sélectionner les images pour lesquelles la vitesse estimée de déplacement du motif est inférieure à un seuil de vitesse (VT),
la sélection d'une image présélectionnée comprenant des étapes de :

localisation de l'image de la pupille (P) de l'oeil,
détermination d'un profil d'intensité (D($\theta$)) de pixels situés sur un anneau (IR) d'iris sensiblement circulaire, et centré sensiblement sur le centre de l'image de la pupille, le profil d'intensité étant établi en fonction d'un angle déterminant la position de chaque pixel sur l'anneau,
mesure de la netteté de la texture de l'iris de l'oeil dans l'image, à partir d'une énergie de composantes moyennes fréquences extraites du profil d'intensité,
calcul d'un indice de qualité (Q(t)) pour chaque image fonction d'une mesure de la densité des pixels noirs de l'image de la pupille, et de la mesure de la netteté de la texture de l'image de l'iris, et
comparaison de l'indice de qualité de l'image à un seuil de qualité (QT), les images sélectionnées ayant un indice de qualité supérieur au seuil de qualité.

4. Procédé selon l'une des revendications 1 à 3, dans lequel la présélection d'images comprend des étapes consistant à :

- calculer un contraste (CS) de chaque image (t) de la séquence d'images,
- comparer le contraste obtenu à un seuil de contraste (CT), et
- rejeter l'image si le contraste obtenu est inférieur au seuil de contraste.

5. Procédé selon la revendication 4, dans lequel le contraste CS d'une image est calculé à l'aide de la formule suivante :

$$CS = \frac{I\max - I\min}{I\max + I\min}$$

dans laquelle :

$$I\max = \max_{i=1}^{N} G_t^i(x, y)$$

$$I\min = \min_{i=1}^{N} G_t^i(x, y)$$

$G_t^i(x, y)$ représente le niveau de gris ou la luminance du pixel de coordonnées x et y dans une région de l'image t.

6. Procédé selon l'une des revendications 2 à 5, dans lequel la localisation du motif (P) dans chaque image comprend des étapes consistant à :

- estimer la position du motif dans l'image en fonction de la position du motif dans une image précédente de la séquence,

- définir une zone de recherche (ROI) du motif centrée sur la position estimée du motif dans l'image (t), et
- localiser le motif dans l'image en se limitant à la zone de recherche.

7.  Procédé selon la revendication 6, dans lequel l'estimation de la position du motif dans l'image est effectuée en mettant en oeuvre le modèle de Kalman standard.

8.  Procédé selon l'une des revendications 6 et 7, dans lequel le motif est l'image de la pupille d'un oeil.

9.  Procédé selon l'une des revendications 6 à 8, dans lequel l'image de la pupille est localisée dans la zone de recherche (ROI) en recherchant des pixels ayant un niveau de gris ou une luminance inférieure à un seuil d'intensité (IT), et en déterminant le centre (C) et le rayon (R) d'un cercle suivant approximativement le contour des pixels trouvés.

10. Procédé selon l'une des revendications 1 à 9, dans lequel la sélection des images comprend une étape de mesure de la densité des pixels noirs dans une fenêtre (P) de localisation de la pupille dans chaque image.

11. Procédé selon l'une des revendications 1 à 10, dans lequel la mesure de la netteté de la texture de l'image de l'iris dans une image t est effectuée en calculant un indice de netteté I(t) à l'aide de la formule suivante :

$$I(t) = \frac{EMF}{ET - E\max}$$

dans laquelle :

EMF représente l'énergie des composantes de moyennes fréquences d'un profil d'intensité d'iris des pixels situés sur l'anneau (IR) et localisés sur l'anneau par un angle,
ET est l'énergie totale du spectre de Fourier du profil d'intensité, et
Emax est l'énergie maximale du spectre de Fourier du profil d'intensité.

12. Procédé selon l'une des revendications 1 à 11, dans lequel l'indice de qualité Q(t) pour une image t est obtenu à l'aide de la formule suivante :

$$Q(t) = \alpha d(t) + (1 - \alpha)I(t) + \frac{1}{V(t) + \frac{1}{\varepsilon}}$$

dans laquelle :

$\alpha$ et $\varepsilon$ sont des coefficients déterminés expérimentalement, et égaux de préférence à 0,5 et 0,0001 respectivement,
d(t) est la densité des pixels noirs dans la fenêtre (P) de localisation de la pupille dans l'image t,
I(t) est un indice de netteté de l'iris de l'image t, et
V(t) est la vitesse estimée de la pupille dans l'image t par rapport à l'image précédente.

13. Procédé selon l'une des revendications 1 à 12, dans lequel le seuil de qualité (QT) est ajusté par une machine d'apprentissage (APM).

14. Procédé selon l'une des revendications 1 à 13, comprenant une étape préalable de sous-échantillonnage spatial des images de la séquence d'images.

15. Procédé selon l'une des revendications 1 à 14, comprenant des étapes de mémorisation d'un nombre prédéfini d'images sélectionnées, et de sélection parmi les images mémorisées d'un nombre prédéfini d'images ayant une netteté et/ou un contraste le plus élevé.

**16.** Dispositif de sélection d'une image d'oeil dans une séquence d'images en fonction de critères de netteté et de contraste, comprenant :

- un module de présélection d'images (QSEL) configuré pour présélectionner des images par une analyse simplifiée de netteté et/ou de contraste d'images (t) de la séquence d'images, et
- un module de sélection d'image (FSEL) configuré pour sélectionner une image présélectionnée, par une analyse fine de la netteté des images présélectionnées,

**caractérisé en ce qu'**il comprend un module (DLP) configuré pour localiser l'image de la pupille (P) de l'oeil dans les images présélectionnées, le module de sélection d'image (FSEL) étant configuré pour :

déterminer dans chaque image présélectionnée un profil d'intensité (D($\theta$)) de pixels situés sur un anneau (IR) d'iris sensiblement circulaire et centré sensiblement sur le centre de l'image de la pupille, la position de chaque pixel sur l'anneau étant déterminée par un angle, le profil d'intensité étant établi en fonction d'un angle déterminant la position de chaque pixel sur l'anneau, et
mesurer la netteté de la texture de l'iris de l'oeil à partir d'une énergie de composantes moyennes fréquences du profil d'intensité,
calculer un indice de qualité (Q(t)) pour chaque image fonction d'une mesure de la densité des pixels noirs de l'image de la pupille, de la mesure de la netteté de la texture de l'image de l'iris, et d'une mesure de la vitesse de déplacement de la pupille dans l'image par rapport à une image précédente, et
comparer l'indice de qualité de l'image à un seuil de qualité (QT), les images sélectionnées ayant un indice de qualité supérieur au seuil de qualité.

**17.** Dispositif selon la revendication 16, dans lequel la séquence d'images (t) est reçue en flux continu, le module de présélection (QSEL) étant configuré pour :

- localiser un motif (P) dans chaque image de la séquence,
- estimer une vitesse de déplacement du motif entre deux images successives de la séquence, et
- sélectionner des images pour lesquelles la vitesse estimée de déplacement du motif est inférieure à un seuil de vitesse (VT).

**18.** Dispositif de sélection d'une image d'oeil dans un ensemble d'images en fonction de critères de netteté et de contraste, comprenant :

- un module de présélection d'images (QSEL) configuré pour présélectionner des images par une analyse simplifiée de netteté et/ou de contraste d'images (t) de l'ensemble d'images, et
- un module de sélection d'image (FSEL) configuré pour sélectionner une image présélectionnée, par une analyse fine de la netteté des images présélectionnées, **caractérisé en ce que** l'ensemble d'images est une séquence d'images (t) reçue en flux continu, le module de présélection d'images (QSEL) étant configuré pour :

localiser un motif (P) dans chaque image de la séquence,
estimer une vitesse de déplacement du motif entre deux images successives de la séquence, et
sélectionner les images pour lesquelles la vitesse estimée de déplacement du motif est inférieure à un seuil de vitesse (VT),
et **en ce que** le dispositif de sélection d'image comprend un module (DLP) configuré pour localiser l'image de la pupille (P) de l'oeil dans les images présélectionnées,
le module de sélection d'image (FSEL) étant configuré pour :

déterminer dans chaque image présélectionnée un profil d'intensité (D($\theta$)) de pixels situés sur un anneau (IR) d'iris sensiblement circulaire et centré sensiblement sur le centre de l'image de la pupille, la position de chaque pixel sur l'anneau étant déterminée par un angle, le profil d'intensité étant établi en fonction d'un angle déterminant la position de chaque pixel sur l'anneau, et
mesurer la netteté de la texture de l'iris de l'oeil à partir d'une énergie de composantes moyennes fréquences du profil d'intensité,
calculer un indice de qualité (Q(t)) pour chaque image fonction d'une mesure de la densité des pixels noirs de l'image de la pupille, de la mesure de la netteté de la texture de l'image de l'iris, et
comparer l'indice de qualité de l'image à un seuil de qualité (QT), les images sélectionnées ayant un indice de qualité supérieur au seuil de qualité.

**19.** Dispositif selon l'une des revendications 16 à 18, dans lequel le module de présélection (QSEL) est configuré pour :

- calculer un contraste (CS) de chaque image (t) de la séquence d'images,
- comparer le contraste obtenu à un seuil de contraste (CT), et
- rejeter l'image si le contraste obtenu est inférieur au seuil de contraste.

**20.** Dispositif selon la revendication 19, dans lequel le contraste CS d'une image est calculé à l'aide de la formule suivante :

$$CS = \frac{\mathrm{Im\,ax} - \mathrm{Im\,in}}{\mathrm{Im\,ax} + \mathrm{Im\,in}}$$

dans laquelle :

$$\mathrm{Im\,ax} = \max_{i=1}^{N} G_t^i(x, y)$$

$$\mathrm{Im\,in} = \min_{i=1}^{N} G_t^i(x, y)$$

$G_t^i(x, y)$ représente le niveau de gris ou la luminance du pixel de coordonnées x et y dans une région de l'image t.

**21.** Dispositif selon l'une des revendications 17 à 20, dans lequel le module de présélection (QSEL) est configuré pour :

- estimer la position du motif dans l'image en fonction de la position du motif dans une image précédente de la séquence,
- définir une zone de recherche (ROI) du motif centrée sur la position estimée du motif dans l'image (t), et
- localiser le motif dans l'image en se limitant à la zone de recherche.

**22.** Dispositif selon la revendication 21, dans lequel le module de présélection (QSEL) est configuré pour estimer la position du motif dans l'image en mettant en oeuvre le modèle de Kalman standard.

**23.** Dispositif selon l'une des revendications 21 et 22, dans lequel le motif est l'image de la pupille d'un oeil.

**24.** Dispositif selon l'une des revendications 21 à 23, dans lequel le module de présélection (QSEL) est configuré pour localiser la pupille dans la zone de recherche (ROI) en recherchant des pixels ayant un niveau de gris ou une luminance inférieure à un seuil d'intensité (IT), et en déterminant le centre (C) et le rayon (R) d'un cercle suivant approximativement le contour des pixels trouvés.

**25.** Dispositif selon l'une des revendications 16 à 24, dans lequel le module de sélection (FSEL) est configuré pour calculer un indice de netteté I(t) à l'aide de la formule suivante :

$$I(t) = \frac{\mathrm{EMF}}{\mathrm{ET} - \mathrm{E\,max}}$$

dans laquelle :

EMF représente l'énergie des composantes de moyennes fréquences d'un profil d'intensité d'iris des pixels situés sur l'anneau (IR) et localisés sur l'anneau par un angle,
ET est l'énergie totale du spectre de Fourier du profil d'intensité, et
Emax est l'énergie maximale du spectre de Fourier du profil d'intensité.

**26.** Dispositif selon l'une des revendications 16 à 25, dans lequel l'indice de qualité Q(t) pour une image t est obtenu à l'aide de la formule suivante :

$$Q(t) = \alpha d(t) + (1-\alpha)I(t) + \cfrac{1}{V(t) + \cfrac{1}{\varepsilon}}$$

dans laquelle :

$\alpha$ et $\varepsilon$ sont des coefficients déterminés expérimentalement, et égaux de préférence à 0,5 et 0,0001 respectivement,
d(t) est la densité des pixels noirs dans la fenêtre (P) de localisation de la pupille dans l'image t, I(t) est un indice de netteté de l'iris de l'image t, et
V(t) est la vitesse estimée de la pupille dans l'image t par rapport à l'image précédente.

**27.** Dispositif selon l'une des revendications 16 à 26, dans lequel le seuil de qualité (QT) est ajusté par une machine d'apprentissage (APM).

**28.** Dispositif selon l'une des revendications 16 à 27, comprenant un module de sous-échantillonnage (SES) qui sous-échantillonne les images de la séquence d'images et qui envoie des images sous-échantillonnées au module de présélection (QSEL).

**29.** Dispositif selon l'une des revendications 16 à 28, comprenant une zone mémoire (IMEM) pour mémoriser un nombre prédéfini d'images sélectionnées par le module de sélection fine (FSEL) et un module de sélection (MSEL) pour sélectionner parmi les images mémorisées un nombre prédéfini d'images ayant une netteté et/ou un contraste les plus élevés.

**Patentansprüche**

**1.** Verfahren zur Auswahl eines Augenbildes in einer Bildfolge, welches in einer elektronischen Vorrichtung eingesetzt wird, wobei das Verfahren die folgenden Schritte umfasst:

Vorwahl von Bildern (t) durch eine vereinfachte Analyse der Schärfe und/oder des Kontrasts von Bildern der Bildfolge, und
Auswahl eines vorgewählten Bildes durch eine Feinanalyse der Schärfe der vorgewählten Bilder,
**dadurch gekennzeichnet, dass** es für jedes vorgewählte Bild einen Schritt der Lokalisierung des Bildes der Pupille (P) des Auges umfasst, wobei die Auswahl eines vorgewählten Bildes die folgenden Schritte umfasst:

Bestimmung eines Intensitätsprofils (D($\theta$)) von Pixeln, die auf einem im Wesentlichen kreisförmigen Irisring (IR) liegen und im Wesentlichen auf die Mitte des Pupillenbildes zentriert sind, wobei das Intensitätsprofil je nach einem Winkel erstellt wird, der die Position von jedem Pixel auf dem Ring festlegt,
Messung der Schärfe der Textur der Augeniris im Bild, aus einer Energie von Mittelfrequenzkomponenten, die aus dem Intensitätsprofil herausgezogen werden,
Berechnung von einem Qualitätsindex (Q(t)) für jedes Bild, in Abhängigkeit von einer Messung der Dichte der schwarzen Pixel des Pupillenbildes, der Messung der Schärfe der Textur des Irisbildes und einer Messung der Bewegungsgeschwindigkeit der Pupille im Bild im Vergleich mit einem vorherigen Bild, und
Vergleich von dem Qualitätsindex des Bildes mit einem Qualitätsgrenzwert (QT), wobei der Qualitätsindex der ausgewählten Bilder über dem Qualitätsgrenzwert liegt.

**2.** Verfahren nach Anspruch 1, bei dem die Bildfolge (t) in kontinuierlichem Fluss empfangen wird, wobei die Bildvorwahl die folgenden Schritte umfasst:

Lokalisierung eines Motivs (P) in jedem Bild der Bildfolge,
Schätzen einer Geschwindigkeit der Bewegung des Motivs zwischen zwei aufeinanderfolgenden Bildern der Bildfolge, und

Auswahl der Bilder, für die die geschätzte Bewegungsgeschwindigkeit des Motivs unter einem Geschwindigkeitsgrenzwert (VT) liegt.

**3.** Verfahren zur Auswahl eines Augenbildes in einer Bildmenge, welches in einer elektronischen Vorrichtung eingesetzt wird, wobei das Verfahren die folgenden Schritte umfasst:

Vorwahl von Bildern (t) durch eine vereinfachte Analyse der Schärfe und/oder des Kontrasts von Bildern der Bildmenge, und
Auswahl eines vorgewählten Bildes durch eine Feinanalyse der Schärfe der vorgewählten Bilder,
**dadurch gekennzeichnet, dass** die Bildmenge eine Folge von Bildern (t) ist, die in kontinuierlichem Fluss empfangen wird, wobei die Bildvorwahl die folgenden Schritte umfasst:

Lokalisierung eines Motivs (P) in jedem Bild der Bildfolge,
Schätzen einer Geschwindigkeit der Bewegung des Motivs zwischen zwei aufeinanderfolgenden Bildern der Bildfolge, und
Auswahl der Bilder, für die die geschätzte Bewegungsgeschwindigkeit des Motivs unter einem Geschwindigkeitsgrenzwert (VT) liegt.
wobei die Auswahl eines vorgewählten Bildes die folgenden Schritte umfasst:

Lokalisierung des Bildes der Pupille (P) des Auges,
Bestimmung eines Intensitätsprofils ($D(\theta)$) von Pixeln, die auf einem im Wesentlichen kreisförmigen Irisring (IR) liegen und im Wesentlichen auf die Mitte des Pupillenbildes zentriert sind, wobei das Intensitätsprofil je nach einem Winkel erstellt wird, der die Position von jedem Pixel auf dem Ring festlegt,
Messung der Schärfe der Textur der Augeniris im Bild, aus einer Energie von Mittelfrequenzkomponenten, die aus dem Intensitätsprofil herausgezogen werden,
Berechnung von einem Qualitätsindex (Q(t)) für jedes Bild in Abhängigkeit von einer Messung der Dichte der schwarzen Pixel des Pupillenbildes und der Messung der Schärfe der Textur des Irisbildes, und
Vergleich von dem Qualitätsindex des Bildes mit einem Qualitätsgrenzwert (QT), wobei der Qualitätsindex der ausgewählten Bilder über dem Qualitätsgrenzwert liegt.

**4.** Verfahren nach einem der Ansprüche 1 bis 3, bei dem die Bildvorwahl die folgenden Schritte umfasst, die darin bestehen:

- einen Kontrast (CS) für jedes Bild (t) der Bildfolge zu berechnen,
- den erhaltenen Kontrast mit einem Kontrastgrenzwert (CT) zu vergleichen, und
- das Bild zurückzuweisen, wenn der erhaltene Kontrast unter dem Kontrastgrenzwert liegt.

**5.** Verfahren nach Anspruch 4, bei dem der Kontrast CS eines Bildes mit Hilfe der folgenden Formel berechnet wird:

$$CS = \frac{I\max - I\min}{I\max + I\min}$$

mit:

$$I\max = \max_{i=1}^{N} G_t^i(x, y)$$

$$I\min = \min_{i=1}^{N} G_t^i(x, y)$$

$G_t^i(x, y)$ repräsentiert die Graustufe oder die Helligkeit des Pixels mit den Koordinaten x und y in einer Region des Bildes t.

6. Verfahren nach einem der Ansprüche 2 bis 5, bei dem die Lokalisierung des Motivs (P) in jedem Bild die folgenden Schritte umfasst, die darin bestehen:

   - die Position des Motivs im Bild je nach der Position des Motivs in einem vorherigen Bild der Bildfolge zu schätzen,
   - eine Suchzone (ROI) für das Motiv zu bestimmen, die auf die geschätzte Position des Motivs im Bild (t) zentriert ist, und
   - das Motiv im Bild zu lokalisieren, wobei man sich auf die Suchzone beschränkt.

7. Verfahren nach Anspruch 6, bei dem die Position des Motivs im Bild beim Einsetzen des Standard-Kalmanmodells geschätzt wird.

8. Verfahren nach einem der Ansprüche 6 und 7, bei dem das Motiv das Bild der Pupille eines Auges ist.

9. Verfahren nach einem der Ansprüche 6 bis 8, bei dem das Bild der Pupille in der Suchzone (ROI) lokalisiert wird, indem es nach Pixeln mit einer Graustufe oder einer Helligkeit gesucht wird, deren Wert unter einem Intensitätsgrenzwert (IT) liegt, und indem das Zentrum (C) und der Radius (R) eines Kreises bestimmt werden, der in etwa dem Umriss der gefundenen Pixel folgt.

10. Verfahren nach einem der Ansprüche 1 bis 9, bei dem die Bildauswahl einen Schritt des Messens der Dichte der schwarzen Pixel in einem Fenster (P) der Lokalisierung der Pupille in jedem Bild umfasst.

11. Verfahren nach einem der Ansprüche 1 bis 10, bei dem die Schärfe der Textur der Irisbild in einem Bild t gemessen wird, indem ein Schärfeindex I(t) mit Hilfe der folgenden Formel berechnet wird:

$$I(t) = \frac{EMF}{ET - E\max}$$

mit:

   EMF repräsentiert die Energie der Mittelfrequenzkomponenten eines Irisintensitätsprofils der Pixel, die auf dem Ring (IR) liegen und die auf dem Ring durch einen Winkel lokalisiert werden,
   ET ist die Gesamtenergie des Fourierspektrums des Intensitätsprofils, und
   Emax ist die maximale Energie des Fourierspektrums des Intensitätsprofils.

12. Verfahren nach einem der Ansprüche 1 bis 11, bei dem der Qualitätsindex Q(t) für ein Bild t mit Hilfe der folgenden Formel gefunden wird:

$$Q(t) = \alpha d(t) + (1 - \alpha)I(t) + \frac{1}{V(t) + \dfrac{1}{\varepsilon}}$$

mit:

   $\alpha$ und $\varepsilon$ sind experimentell bestimmte Koeffizienten, die vorzugsweise gleich 0,5 bzw. 0,0001 sind,
   d(t) ist die Dichte der schwarzen Pixel im Fenster (P) der Lokalisierung der Pupille im Bild t,
   I(t) ist ein Index der Schärfe der Iris von Bild t, und
   V(t) ist die geschätzte Geschwindigkeit der Pupille im Bild t gegenüber dem vorherigen Bild.

13. Verfahren nach einem der Ansprüche 1 bis 12, bei dem der Qualitätsgrenzwert (QT) durch eine Lernmaschine (APM) eingestellt wird.

14. Verfahren nach einem der Ansprüche 1 bis 13, umfassend einen vorausgehenden Schritt des räumlichen Unterabtastens von Bildern der Bildfolge.

EP 1 903 475 B1

**15.** Verfahren nach einem der Ansprüche 1 bis 14, umfassend Schritte des Speicherns einer vordefinierten Anzahl von ausgewählten Bildern und der Auswahl einer vordefinierten Anzahl von Bildern mit der höchsten Schärfe und/oder dem höchsten Kontrast unter den gespeicherten Bildern.

**16.** Vorrichtung zur Auswahl eines Augenbildes aus einer Bildfolge je nach den Kriterien Schärfe und Kontrast, umfassend:

- ein Bildvorwahlmodul (QSEL), das konfiguriert ist, um Bilder durch eine vereinfachte Analyse von Schärfe und/oder Kontrast von Bildern (t) der Bildfolge vorzuwählen, und
- ein Bildauswahlmodul (FSEL), das konfiguriert ist, um ein vorgewähltes Bild durch eine Feinanalyse der Schärfe der vorgewählten Bilder auszuwählen

**dadurch gekennzeichnet, dass** es ein Modul (DLP) umfasst, das konfiguriert ist, um das Bild der Pupille (P) des Auges in den vorgewählten Bilder zu lokalisieren, wobei das Bildauswahlmodul (FSEL) konfiguriert ist, um:

in jedem vorgewählten Bild ein Intensitätsprofil (D($\theta$)) von Pixeln festzulegen, die auf einem im Wesentlichen kreisförmigen Irisring (IR) liegen und im Wesentlichen auf die Mitte des Pupillenbildes zentriert sind, wobei die Position von jedem Pixel auf dem Ring durch einen Winkel festgelegt ist, wobei das Intensitätsprofil je nach einem Winkel erstellt wird, der die Position von jedem Pixel auf dem Ring festlegt, und
die Schärfe der Textur der Augeniris aus einer Energie von Mittelfrequenzkomponenten des Intensitätsprofils zu messen,
einen Qualitätsindex (Q(t)) für jedes Bild zu berechnen, in Abhängigkeit von einer Messung der Dichte der schwarzen Pixel des Pupillenbildes, der Messung der Schärfe der Textur des Irisbildes und einer Messung der Bewegungsgeschwindigkeit der Pupille im Bild im Vergleich mit einem vorherigen Bild, und
den Qualitätsindex des Bildes mit einem Qualitätsgrenzwert (QT) zu vergleichen, wobei der Qualitätsindex der ausgewählten Bilder über dem Qualitätsgrenzwert liegt.

**17.** Vorrichtung nach Anspruch 16, bei dem die Bildfolge (t) in kontinuierlichem Fluss empfangen wird, wobei das Vorwahlmodul (QSEL) konfiguriert ist, um:

- ein Motiv (P) in jedem Bild der Bildfolge zu lokalisieren,
- eine Geschwindigkeit der Bewegung des Motivs zwischen zwei aufeinanderfolgenden Bildern der Bildfolge zu schätzen, und
- Bilder auszuwählen, für die die geschätzte Bewegungsgeschwindigkeit des Motivs unter einem Geschwindigkeitsgrenzwert (VT) liegt.

**18.** Vorrichtung zur Auswahl eines Augenbildes aus einer Bildmenge je nach den Kriterien Schärfe und Kontrast, umfassend:

- ein Bildvorwahlmodul (QSEL), das konfiguriert ist, um Bilder durch eine vereinfachte Analyse von Schärfe und/oder Kontrast von Bildern (t) der Bildmenge vorzuwählen, und
- ein Bildauswahlmodul (FSEL), das konfiguriert ist, um ein vorgewähltes Bild durch eine Feinanalyse der Schärfe der vorgewählten Bilder auszuwählen,

**dadurch gekennzeichnet, dass** die Bildmenge eine Folge von Bildern (t) ist, die in kontinuierlichem Fluss empfangen wird, wobei das Bildvorwahlmodul (QSEL) konfiguriert ist, um:

ein Motiv (P) in jedem Bild der Bildfolge zu lokalisieren,
eine Bewegungsgeschwindigkeit des Motivs zwischen zwei aufeinanderfolgenden Bildern der Bildfolge zu schätzen, und
die Bilder auszuwählen, für die die geschätzte Bewegungsgeschwindigkeit des Motivs unter einem Geschwindigkeitsgrenzwert (VT) liegt,
und dass die Bildauswahlvorrichtung ein Modul (DLP) umfasst, das konfiguriert ist, um das Bild der Augenpupille (P) in den vorgewählten Bildern zu lokalisieren,
wobei das Bildauswahlmodul (FSEL) konfiguriert ist, um:

in jedem vorgewählten Bild ein Intensitätsprofil (D($\theta$)) von Pixeln festzulegen, die auf einem im Wesentlichen kreisförmigen Irisring (IR) liegen und im Wesentlichen auf die Mitte des Pupillenbildes zentriert sind, wobei die Position von jedem Pixel auf dem Ring durch einen Winkel festgelegt ist, und wobei das Intensitätsprofil je nach einem Winkel erstellt wird, der die Position von jedem Pixel auf dem Ring festlegt, und

die Schärfe der Textur der Augeniris aus einer Energie von Mittelfrequenzkomponenten des Intensitätsprofils zu messen,

einen Qualitätsindex Q(t) für jedes Bild zu berechnen, in Abhängigkeit von einer Messung der Dichte der schwarzen Pixel des Pupillenbildes, der Messung der Schärfe der Textur des Irisbildes, und

den Qualitätsindex des Bildes mit einem Qualitätsgrenzwert (QT) zu vergleichen, wobei der Qualitätsindex der ausgewählten Bilder über dem Qualitätsgrenzwert liegt.

**19.** Vorrichtung nach einem der Ansprüche 16 bis 18, bei der das Vorwahlmodul (QSEL) konfiguriert ist, um:

- einen Kontrast (CS) für jedes Bild (t) der Bildfolge zu berechnen,
- den erhaltenen Kontrast mit einem Kontrastgrenzwert (CT) zu vergleichen, und
- das Bild zurückzuweisen, wenn der erhaltene Kontrast unter dem Kontrastgrenzwert liegt.

**20.** Vorrichtung nach Anspruch 19, bei der der Kontrast CS eines Bildes mit Hilfe der folgenden Formel berechnet wird:

$$CS = \frac{I\max - I\min}{I\max + I\min}$$

mit:

$$I\max = \max_{i=1}^{N} G_t^i(x, y)$$

$$I\min = \min_{i=1}^{N} G_t^i(x, y)$$

$G_t^i(x, y)$ repräsentiert die Graustufe oder die Helligkeit des Pixels mit den Koordinaten x und y in einer Region des Bildes t.

**21.** Vorrichtung nach einem der Ansprüche 17 bis 20, bei der das Vorwahlmodul (QSEL) konfiguriert ist, um:

- die Position des Motivs im Bild je nach der Position des Motivs in einem vorherigen Bild der Bildfolge zu schätzen,
- eine Suchzone (ROI) für das Motiv zu bestimmen, die auf die geschätzte Position des Motivs im Bild (t) zentriert ist, und
- das Motiv im Bild zu lokalisieren, wobei man sich auf die Suchzone beschränkt.

**22.** Vorrichtung nach Anspruch 21, bei der das Vorwahlmodul (QSEL) konfiguriert ist, um die Position des Motivs im Bild beim Einsetzen des Standard-Kalmanmodells zu schätzen.

**23.** Vorrichtung nach einem der Ansprüche 21 und 22, bei der das Motiv das Bild der Pupille eines Auges ist.

**24.** Vorrichtung nach einem der Ansprüche 21 bis 23, bei der das Vorwahlmodul (QSEL) konfiguriert ist, um die Pupille in der Suchzone (ROI) zu lokalisieren, indem es nach Pixeln mit einer Graustufe oder einer Helligkeit gesucht wird, deren Wert unter einem Intensitätsgrenzwert (IT) liegt, und indem das Zentrum (C) und der Radius (R) eines Kreises bestimmt werden, der in etwa dem Umriss der gefundenen Pixel folgt.

**25.** Vorrichtung nach einem der Ansprüche 16 bis 24, bei der das Auswahlmodul (FSEL) konfiguriert ist, um einen Schärfeindex I(t) mit Hilfe der folgenden Formel zu berechnen:

$$I(t) = \frac{EMF}{ET - E\max}$$

mit:

EMF repräsentiert die Energie der Mittelfrequenzkomponenten eines Irisintensitätsprofils der Pixel, die auf dem Ring (IR) liegen und die auf dem Ring durch einen Winkel lokalisiert werden.
ET ist die Gesamtenergie des Fourierspektrums des Intensitätsprofils, und
Emax ist die maximale Energie des Fourierspektrums des Intensitätsprofils.

26. Vorrichtung nach einem der Ansprüche 16 bis 25, bei der der Qualitätsindex Q(t) für ein Bild t mit Hilfe der folgenden Formel gefunden wird:

$$Q(t) = \alpha d(t) + (1-\alpha)I(t) + \frac{1}{V(t) + \frac{1}{\varepsilon}}$$

mit:

$\alpha$ und $\varepsilon$ sind experimentell bestimmte Koeffizienten, die vorzugsweise gleich 0,5 bzw. 0,0001 sind,
d(t) ist die Dichte der schwarzen Pixel im Fenster (P) der Lokalisierung der Pupille im Bild t,
I(t) ist ein Index der Schärfe der Iris von Bild t, und
V(t) ist die geschätzte Geschwindigkeit der Pupille im Bild t gegenüber dem vorherigen Bild.

27. Vorrichtung nach einem der Ansprüche 16 bis 26, bei der der Qualitätsgrenzwert (QT) durch eine Lernmaschine (APM) eingestellt wird.

28. Vorrichtung nach einem der Ansprüche 16 bis 27, umfassend ein Unterabtastungsmodul (SES), das die Bilder der Bildfolge unterabtastet, und das unterabgetastete Bilder zum Vorwahlmodul (QSEL) übermittelt.

29. Vorrichtung nach einem der Ansprüche 16 bis 28, umfassend eine Speicherzone (IMEM) zum Speichern einer vordefinierten Anzahl von Bildern, die vom Feinauswahlmodul (FSEL) ausgewählt wurden und ein Auswahlmodul (MSEL) zum Auswählen einer vordefinierten Anzahl von Bildern mit der höchsten Schärfe und/oder dem höchsten Kontrast unter den gespeicherten Bildern.

**Claims**

1. A method for selecting an eye image in a sequence of images, implemented in an electronic device, the method comprising steps of:

pre-selecting images (t) by a simplified sharpness and/or contrast analysis of images in the sequence of images, and
selecting a pre-selected image by a close analysis of the sharpness of the pre-selected images,
**characterized in that** it comprises for each pre-selected image a step of locating the image of the pupil (P) of the eye, the selection of a pre-selected image comprising steps of:

determining an intensity profile (D($\theta$)) of pixels situated on a substantially circular iris ring (IR), and centered substantially on the center of the image of the pupil, the intensity profile being established according to an angle determining the position of each pixel on the ring,
measuring the sharpness of the texture of the iris of the eye in the image, from an energy of medium-frequency components extracted from the intensity profile,
calculating a quality index (Q(t)) for each image according to a density measurement of the black pixels of the pupil image, to the measurement of the sharpness of the texture of the image of the iris, and to a measurement of the speed of displacement of the pupil in the image in relation to a previous image, and comparing the image quality index with a quality threshold (QT), the images selected having a quality index above the quality threshold.

2. Method according to claim 1, wherein the sequence of images (t) is received in a continuous stream, the pre-selection of images comprising steps of:

locating a pattern (P) in each image of the sequence,
estimating a speed of displacement of the pattern between two successive images of the sequence, and
selecting the images for which the estimated speed of displacement of the pattern is lower than a speed threshold (VT).

3. Method for selecting an eye image in a set of images, implemented in an electronic device, the method comprising steps of:

pre-selecting images (t) by a simplified sharpness and/or contrast analysis of images in the set of images, and
selecting a pre-selected image by a close analysis of the sharpness of the pre-selected images,
**characterized in that** the set of images is a sequence of images (t) received in a continuous stream, the pre-selection of images comprising steps of:

locating a pattern (P) in each image of the sequence,
estimating a speed of displacement of the pattern between two successive images of the sequence, and
selecting the images for which the estimated speed of displacement of the pattern is lower than a speed threshold (VT),
the selection of a pre-selected image comprising steps of:

locating the image of the pupil (P) of the eye,
determining an intensity profile ($D(\theta)$) of pixels situated on a substantially circular iris ring (IR), and centered substantially on the center of the image of the pupil, the intensity profile being established according to an angle determining the position of each pixel on the ring,
measuring the sharpness of the texture of the iris of the eye in the image, from an energy of medium-frequency components extracted from the intensity profile,
calculating a quality index (Q(t)) for each image according to a density measurement of the black pixels of the pupil image, and to the measurement of the sharpness of the texture of the image of the iris, and
comparing the image quality index with a quality threshold (QT), the images selected having a quality index above the quality threshold.

4. Method according to one of claims 1 to 3, wherein the pre-selection of images comprises steps of:

- calculating a contrast (CS) of each image (t) in the sequence of images,
- comparing the contrast obtained with a contrast threshold (CT), and
- rejecting the image if the contrast obtained is lower than the contrast threshold.

5. Method according to claim 4, wherein the contrast CS of an image is calculated using the following formula:

$$CS = \frac{\mathrm{Im}\,ax - \mathrm{Im}\,in}{\mathrm{Im}\,ax + \mathrm{Im}\,in}$$

wherein:

$$\mathrm{Im}\,ax = \max_{i=1}^{N} G_t^i(x, y)$$

$$\mathrm{Im\,in} = \min_{i=1}^{N} G_t^i(x, y)$$

$G_t^i(x, y)$ represents the gray level or the luminance of the pixel of coordinates x and y in a region of the image t.

6.  Method according to one of claims 2 to 5, wherein the location of the pattern (P) in each image comprises steps of:

    - estimating the position of the pattern in the image according to the position of the pattern in a previous image of the sequence,
    - defining a search zone (ROI) of the pattern centered on the estimated position of the pattern in the image (t), and
    - locating the pattern in the image by keeping to the search zone.

7.  Method according to claim 6, wherein the position of the pattern in the image is estimated by implementing the standard Kalman model.

8.  Method according to one of claims 6 and 7, wherein the pattern is the image of the pupil of an eye.

9.  Method according to one of claims 6 to 8, wherein the image of the pupil is located in the search zone (ROI) by searching for pixels having a gray level or a luminance lower than an intensity threshold (IT), and by determining the center (C) and the radius (R) of a circle following approximately the contour of the pixels found.

10. Method according to one of claims 1 to 9, wherein the selection of the images comprises a step of measuring the density of the black pixels in a window (P) for locating the pupil in each image.

11. Method according to one of claims 1 to 10, wherein the sharpness of the texture of the image of the iris in an image t is measured by calculating a sharpness index I(t) using the following formula:

$$I(t) = \frac{EMF}{ET - E\max}$$

wherein:

EMF represents the energy of the medium-frequency components of an iris intensity profile of the pixels situated on the ring (IR) and located on the ring by an angle,
ET is the total energy of the Fourier spectrum of the intensity profile, and
Emax is the maximum energy of the Fourier spectrum of the intensity profile.

12. Method according to one of claims 1 to 11, wherein the quality index Q(t) for an image t is obtained using the following formula:

$$Q(t) = \alpha d(t) + (1 - \alpha)I(t) + \frac{1}{V(t) + \dfrac{1}{\varepsilon}}$$

wherein:

$\alpha$ and $\varepsilon$ are coefficients determined experimentally, and preferably equal to 0.5 and 0.0001 respectively,
d(t) is the density of the black pixels in the window (P) for locating the pupil in the image t,
I(t) is a sharpness index of the iris of the image t, and
V(t) is the estimated speed of the pupil in the image t in relation to the previous image.

13. Method according to one of claims 1 to 12, wherein the quality threshold (QT) is adjusted by a learning machine (APM).

**14.** Method according to one of claims 1 to 13, comprising a prior step of spatial sub-sampling of the images in the sequence of images.

**15.** Method according to one of claims 1 to 14, comprising steps of storing a predefined number of selected images and of selecting a predefined number of images having the highest sharpness and/or contrast out of the images stored.

**16.** A device for selecting an eye image in a sequence of images according to sharpness and contrast criteria, comprising:

- an image pre-selection module (QSEL) configured to preselect images by a simplified sharpness and/or contrast analysis of images (t) in the sequence of images, and
- an image selection module (FSEL) configured to select a pre-selected image, by a close analysis of the sharpness of the pre-selected images,

**characterized in that** it comprises a module (DLP) configured to locate the image of the pupil (P) of the eye in the pre-selected images, the image selection module (FSEL) being configured to:

determine in each pre-selected image an intensity profile (D($\theta$)) of pixels situated on a substantially circular iris ring (IR) and substantially centered on the center of the image of the pupil, the position of each pixel on the ring being determined by an angle, the intensity profile being established according to an angle determining the position of each pixel on the ring, and
measure the sharpness of the texture of the iris of the eye from an energy of medium-frequency components of the intensity profile,
calculate a quality index (Q(t)) for each image according to a density measurement of the black pixels of the image of the pupil, to the measurement of the sharpness of the texture of the image of the iris, and to a measurement of the speed of displacement of the pupil in the image in relation to a previous image, and
compare the image quality index with a quality threshold (QT), the images selected having a quality index above the quality threshold.

**17.** Device according to claim 16, wherein the sequence of images (t) is received in a continuous stream, the pre-selection module (QSEL) being configured to:

- locate a pattern (P) in each image of the sequence,
- estimate a speed of displacement of the pattern between two successive images of the sequence, and
- select images for which the estimated speed of displacement of the pattern is lower than a speed threshold (VT).

**18.** A device for selecting an eye image in a set of images according to sharpness and contrast criteria, comprising:

- an image pre-selection module (QSEL) configured to preselect images by a simplified sharpness and/or contrast analysis of images (t) in the set of images, and
- an image selection module (FSEL) configured to select a pre-selected image, by a close analysis of the sharpness of the pre-selected images,

**characterized in that** the set of images is a sequence of images (t) received in a continuous stream, the image pre-selection module (QSEL) being configured to:

locate a pattern (P) in each image of the sequence,
estimate a speed of displacement of the pattern between two successive images of the sequence, and
select the images for which the estimated speed of displacement of the pattern is lower than a speed threshold (VT),
and **in that** the image selection device comprises a module (DLP) configured to locate the image of the pupil (P) of the eye in the pre-selected images,
the image selection module (FSEL) being configured to:

determine in each pre-selected image an intensity profile (D($\theta$)) of pixels situated on a substantially circular iris ring (IR) and substantially centered on the center of the image of the pupil, the position of each pixel on the ring being determined by an angle, the intensity profile being established according to an angle determining the position of each pixel on the ring, and
measure the sharpness of the texture of the iris of the eye from an energy of medium-frequency components of the intensity profile,
calculate a quality index (Q(t)) for each image according to a density measurement of the black pixels of the image of the pupil, and to the measurement of the sharpness of the texture of the image of the iris, and
compare the quality index of the image with a quality threshold (QT), the images selected having a quality index above the quality threshold.

19. Device according to one of claims 16 to 18, wherein the pre-selection module (QSEL) is configured to:

  - calculate a contrast (CS) of each image (t) in the sequence of images,
  - compare the contrast obtained with a contrast threshold (CT), and
  - reject the image if the contrast obtained is lower than the contrast threshold.

20. Device according to claim 19, wherein the contrast CS of an image is calculated using the following formula:

$$CS = \frac{\mathrm{Imax} - \mathrm{Imin}}{\mathrm{Imax} + \mathrm{Imin}}$$

wherein:

$$\mathrm{Imax} = \max{}_{i=1}^{N} G_t^i(x, y)$$

$$\mathrm{Imin} = \min{}_{i=1}^{N} G_t^i(x, y)$$

$G_t^i(x, y)$ represents the gray level or the luminance of the pixel of coordinates x and y in a region of the image t.

21. Device according to one of claims 17 to 20, wherein the pre-selection module (QSEL) is configured to:

  - estimate the position of the pattern in the image according to the position of the pattern in a previous image of the sequence,
  - define a search zone (ROI) of the pattern centered on the estimated position of the pattern in the image (t), and
  - locate the pattern in the image by keeping to the search zone.

22. Device according to claim 21, wherein the pre-selection module (QSEL) is configured to estimate the position of the pattern in the image by implementing the standard Kalman model.

23. Device according to one of claims 21 and 22, wherein the pattern is the image of the pupil of an eye.

24. Device according to one of claims 21 to 23, wherein the pre-selection module (QSEL) is configured to locate the pupil in the search zone (ROI) by searching for pixels having a gray level or a luminance lower than an intensity threshold (IT), and by determining the center (C) and the radius (R) of a circle following approximately the contour of the pixels found.

25. Device according to one of claims 16 to 24, wherein the selection module (FSEL) is configured to calculate a sharpness index I(t) using the following formula:

$$I(t) = \frac{\mathrm{EMF}}{\mathrm{ET} - \mathrm{Emax}}$$

wherein:

EMF represents the energy of the medium-frequency components of an iris intensity profile of the pixels situated on the ring (IR) and located on the ring by an angle,
ET is the total energy of the Fourier spectrum of the intensity profile, and
Emax is the maximum energy of the Fourier spectrum of the intensity profile.

26. Device according to one of claims 16 to 25, wherein the quality index Q(t) for an image t is obtained using the following formula:

$$Q(t) = \alpha d(t) + (1 - \alpha)I(t) + \cfrac{1}{V(t) + \cfrac{1}{\varepsilon}}$$

wherein:

$\alpha$ and $\varepsilon$ are coefficients determined experimentally, and preferably equal to 0.5 and 0.0001 respectively,
d(t) is the density of the black pixels in the window (P) for locating the pupil in the image t,
I(t) is a sharpness index of the iris of the image t, and
V(t) is the estimated speed of the pupil in the image t in relation to the previous image.

27. Device according to one of claims 16 to 26, wherein the quality threshold (QT) is adjusted by a learning machine (APM).

28. Device according to one of claims 16 to 27, comprising a sub-sampling module (SES) which sub-samples the images in the sequence of images and which sends subsampled images to the pre-selection module (QSEL).

29. Device according to one of claims 16 to 28, comprising a memory zone (IMEM) for storing a predefined number of images selected by the fine selection module (FSEL) and a selection module (MSEL) for selecting a predefined number of images having the highest sharpness and/or contrast out of the images stored.

Fig. 1

Fig. 2

Fig. 3A

Fig. 3B

Fig. 3C

Fig. 4

Fig. 5

Fig. 6

Fig. 7

Fig. 8

Fig. 9

**Fig. 10**

**Fig. 11**

Fig. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004101170 A
- WO 0039760 A
- US 2006029262 A

**Littérature non-brevet citée dans la description**

- **ZHUOSHI WEI et al.** Robust and Fast Assessment of Iris Image Quality. *ADVANCES IN BIOMETRICS,* 05 Janvier 2006, vol. 3832, 464-471
- **KETCHANTANG W. et al.** Video Pupil Tracking for Iris Based Identification. *Lecture Notes in Computer Science,* 2005, vol. 3708, 1-8
- **TISSE et al.** Person identification technique using human iris recognition. *Journal of System Research,* 2003, vol. 4, 67-75
- **W. KETCHANTANG ; S. DERRODE ; S. BOURENNANE ; L. MARTIN.** Video Pupil Tracking for Iris based Identification. *ACIVS 2005, LNCS3708,* 2005, 1-8